# EUROPEAN PATENT SPECIFICATION

(11) **EP 4 184 347 B1**
(45) Date of publication and mention of the grant of the patent: **15.01.2025**
(21) Application number: 21209929.5
(22) Date of filing: 23.11.2021
(51) Int. Cl.: G06N 5/022, G06F 16/535

(54) **COMPUTER-IMPLEMENTED METHOD AND SYSTEM OF COLLECTING, ORGANIZING AND STORING DATA RELATING TO THE MEMORIES OF A HUMAN**
COMPUTERIMPLEMENTIERTES VERFAHREN UND SYSTEM ZUM SAMMELN, ORGANISIEREN UND SPEICHERN VON DATEN IN BEZUG AUF DIE ERINNERUNGEN EINES MENSCHEN
PROCÉDÉ ET SYSTÈME MIS EN OEUVRE PAR ORDINATEUR POUR LA COLLECTE, L'ORGANISATION ET LE STOCKAGE DE DONNÉES RELATIVES AUX MÉMOIRES D'UN ÊTRE HUMAIN

(43) Date of publication of application: 24.05.2023
(73) Proprietor: Popescu, Calin-Laurentiu, 13086 Berlin (DE)
(72) Inventor: Popescu, Calin-Laurentiu, 13086 Berlin (DE)
(74) Representative: Müller, Wolfram Hubertus

(56) References cited:
- US-A1- 2021 073 272
- FEKETE DÉNES LÁSZLÓ ET AL: "A Survey of Ledger Technology-Based Databases", FUTURE INTERNET, vol. 13, no. 8, 31 July 2021 (2021-07-31), pages 1 - 22, XP055914389, ISSN: 1999-5903, Retrieved from the Internet <URL:http://dx.doi.org/10.3390/fi13080197> DOI: 10.3390/fi13080197
- ANONYMOUS: "Fingerprint (computing) - Wikipedia", OLD REVISION OF WIKIPEDIA WEBPAGE, 20 September 2015 (2015-09-20), XP055361989, Retrieved from the Internet <URL:https://en.wikipedia.org/w/index.php?title=Fingerprint_(computing)&oldid=682003203> [retrieved on 20170405]

## Description

The present disclosure relates to a computer-implemented method and system of collecting, organizing, and storing data relating to the memories of a human.

With the advance of ever more complex and artificially intelligent computer systems, mankind's dream of eternal life may finally be fulfilled at least with respect to the chain of facts that are stored in the brain. To this end, it is necessary to mine and backup all day-to-day memories of a human using digital captured data sources. The theory is that the mind and memories can live longer than the human body's cell in a computer system.

So far, however, digital data backup are not available for long term memories of humans. There is no digital solution available for the most important part of the human self, the brain. Once the brain loses its biological viability all the data accumulated is forever lost.

Mining and backing up all day-to-day memories of a human using digital captured data sources is not only relevant from the point of view of "eternal life" but would also be a tremendously helpful to assist a human during his lifetime. For example, the rapid technology evolutions and hardware developments almost force people to change their phones, laptops, and devices every once in a while. With every change comes a huge loss or abandoning of older data that at the time of change is not considered relevant anymore. In another example, humans use on average on a daily basis about three connected devices. The data experience is different and segregated to each of them. In the context of time and data time mapping, it would be beneficial to understand how data coming from different sources parallel the same event, what is duplicated, and where the complementary points between these data exist.

In general, people care more about the recent past information and tend to ignore where the older information is stored and how. In a 10 years time frame it is estimated that an average person loses more than 90% of all its past data such as pictures, memories, documents, notes, ideas, and others.

US2021073272A1 the closest prior art, relates to a method and system for automatically annotating and retrieving digital images generated by users.

Accordingly, there is a need for a new way of efficiently collecting and processing both real-time and historical data that overlap on one or many specific sub-sets of attributes such as timestamp, geolocation, and different classes of similarities with the day-to-day activities and with the labelled human memories generated on the chronological path of the daily life of the user.

The object underlying the present invention is thus to provide for a computer-implemented method and data processing system of collecting, organizing and storing data relating to the memories of a human in an efficient manner that allows to store and re-create memories of a human.

The scope of the invention is defined by the appended claims.

According to the invention, a computer-implemented method of collecting, organizing and storing data relating to the memories of a user is provided. The method comprises the following steps:
a) The step of automatically collecting data relating to events or facts that may form memories of the user using sensor sources and/or digital sources. The sensor sources may be from a broad range of sensor sources that allow to collect data including, e.g., cameras for photo, video and/or audio, wearables for biometric data, headsets for augmented reality and virtual reality media types. The digital sources may include stored text, audio, photos, video, 3d models, virtual environments elements and coordinates, metadata such as weather information or information about people involved with or in the vicinity of a considered event, or any other files relating to events or facts of a human. The sensor sources and digital sources may be provided by a single device or multiple devices such as cameras, smartphones, wearables, virtual reality and augmented reality headsets, and, generally, computers.
b) The step of separating the collected data into a plurality of the digital raw files, and time stamping the digital raw files. The natural ordering principle of the collected data is time. Therefore, data related to a specific time and belonging to a specific content are separated into different digital raw files, wherein the raw files are time stamped.
c) The step of processing at least some of the digital raw files, wherein for each processed raw file the raw file is input into at least one machine learning identification module (referred to as ML ID module). As semantic output of the ML ID module a first so called cognitive block of information is received which identifies content in the raw file such as objects, persons, landscapes, audio content, visual content or audiovisual content. Accordingly, a cognitive block of information identifying content in the raw file is the information provided as output of a ML ID module. The ML ID module may provide as output one or several cognitive blocks of information.

The ML ID module is a machine learning module, wherein identification capabilities of the machine learning module are used to provide for the cognitive block of information.

The processing of the raw file in at least one ML ID module is also referred to as the cognitive extraction phase.

The Cognitive Blocks are structural units generated as the output result of the ML ID real-time processing done on any raw data during a cognitive extraction phase. At least one ML ID module interprets the fed data and extracts the cognitive information out of it comparing raw data against previously-stored ML cognitive models. The extracted semantic information is virtually stored in cognitive blocks. Each cognitive block has an ML signature that is inherited from the ML ID module that helped to extract it from the raw data.

The ML ID modules are known ML modules with established functionality. Examples of such known ML modules are Computer Vision platforms and models which regard systems that recognize objects in digital still and moving images and process them.
d) Further, at least one so called first factual block of information that comprises at least one attribute relating to the first cognitive block of information is provided. Accordingly, a factual block of information is information which supplements a corresponding cognitive block of information with at least one attribute, wherein any information relating to the information of the first cognitive block is considered to represent an attribute.

The provision of the first factual block of information is also referred to as the factual extraction phase and includes searching a first database (which will be later described as first ledger) stored in a computer device and/or computer system for previously stored groups of information, each previously stored group of information comprising a cognitive block of information and a factual block of information that comprises at least one attribute relating to the cognitive block of information, wherein the factual block of information is associated with at least one factual information file. In the terminology used, a factual information file is a file that comprises supplementary information and participates in defining the factual block of information. A factual information file may be, for example, a file comprising text, audio information, photos or audiovisual information.

If during the search a group of information is found that comprises a cognitive block of information that is identical to the first cognitive block of information output from the ML ID module, a determination is made if the raw file is semantically identical to at least one of the at least one factual information files associated with the factual block of information of that group of information. If so, as first factual block of information is defined the factual block of information of that group of information. If not, the first factual block of information is defined as unknown factual information. Accordingly, it is searched by semantically comparing the raw file with the factual information file or files if in a group of information the attribute represented by the factual block of information has already been stored together with the cognitive block of information and, if so, this factual block of information is picked. Otherwise, the factual block of information is defined as unknown factual information.

Further, if during the search no group of information is found that comprises a cognitive block of information that is identical to the first cognitive block of information output from the ML module, the first factual block of information is also defined as unknown factual information. As will be later discussed, unknown factual information may be later replaced by factual blocks of information determined later in time.

The factual blocks are the output of the factual extraction phase. The factual blocks contain more precise information that defines the characteristics of the cognitive extraction and if any the relation with stored groups of information. The factual blocks are always complimentary information of a respective cognitive block. E.g., "guitar" may be the content of a cognitive block, and "my old guitar" may be the content of the respective factual block. The factual blocks are extracted on the basis of respective cognitive blocks. E.g., a guitar object is detected using a ML ID module as cognitive block, and during the factual check characteristics of the guitar are extracted as an attribute relating to the cognitive block, in the current example "my old", wherein the additional information is included in a group of information stored in the first database (first ledger).
e) In a further step of the method, the first cognitive block of information and the first factual block of information are paired into a meta pair of information. The provision of a cognitive block of information and of an associated factual block of information (also referred to as "cognitive block" and "factual block") represents an essential concept of the present invention. Together with the factual blocks, the cognitive blocks are the smallest semantic storage unit.
f) In a further step, the meta pair of information and a reference to the processed raw file is logged in a second database (which will be later described as a second, "meta chain" ledger) stored in a computer device and/or computer system. By searching and browsing the second database, the original information (raw file) may be retrieved (using the stored reference to the raw file) to extract information related to previous memories. In this respect, it is pointed out that a "reference" to a respective raw file is not necessarily a direct link, but it may be a reference to another source of information such as a table which then includes the information about the storage space of the respective raw file. Accordingly, a "reference" to a raw file within the meaning of the present invention is any direct or indirect link or reference to the storage space of the respective raw file.

Aspects of the invention are thus based on the idea to provide a raw data converter with an articulated output structure that includes meta pairs of information that consist of cognitive blocks of information and respective factual blocks of information. A unique aspect of the method lays on the usage of cognitive and factual blocks and the extraction of raw data in accordance with these blocks into meta pairs and grouping multiple different contents of a memory into a database which may later continuously be optimized against the past logged data.

By providing meta pairs of information that consist of cognitive blocks of information and respective factual blocks of information a computer-implemented data structure or format is embodied in a database. This data structure allows to reduce storage space and storage costs by organizing the relation between human memories and by maintaining a high level of detailed reconstructable facts without direct access to all the raw files that were associated with a processed memory. Further, by parsing the second database it is possible to identify relations where the same cognitive and factual blocks exist, as will be discussed further below. In this respect, it is provided for that the second database (the so called "meta chain ledger") has indexed all its memory entries (containing at least the meta pair and the reference to the respective raw file) and the relation of those with other memory entries and the raw files used during their extraction. This makes it relatively simple to reconstruct parts of the memory by referencing it to the similar memories from the affinity pools of that specific memory.

As discussed, the first factual blocks of information are provided by searching the first database for previously stored groups of information. In an aspect of the invention, these previously stored groups of information are built and grouped together in a training phase, wherein the training phase is an ongoing training phase which may provide for additional groups of information at any time. In the training phase, each group of information is provided by the steps of:
- choosing, by a user, a cognitive block of information previously provided by one of the ML ID modules based on a raw file of previously collected data,
- adding, by a user, personal and/or other information about the chosen cognitive block of information, wherein this information is provided in at least one factual information file,
- inputting the at least one factual information file into at least one ML ID module and receiving as semantic output of the ML ID module a factual block of information,
- storing the factual block of information together with the cognitive block of information,
- further storing in the group of information at least a reference to the at least one factual information file.

The idea of the training phase, accordingly, is to take output data of an ML ID module, the output data representing a cognitive block of information, and supplement these output data by user interaction with additional data relating to the cognitive block of information. The additional data is provided in at least one factual information file. The factual information file contains personal and/or other information added by the user such as at least one of text information, photos, audio, video, audiovisual information, geolocation, time and date. This additional data is also input into an ML ID module and the semantic output that is provided forms a factual block of information. This factual block of information is stored together with the cognitive block of information and a reference to the at least one factual information file in a group of information. Accordingly, the factual block of information is also formed by the semantic output of an ML ID module. However, other than with a cognitive block of information, the information input into the ML ID module to provide the factual block of information is provided by a user and represents the individual choice of the user. Therefore, a cognitive block of information is personalized by the respective factual block of information.

It is pointed out that the factual information files are associated with the factual block of information in the sense that they were used to feed the ML ID module to provide for the factual block of information.

In the above example, if the cognitive block of information or ML ID output data is a guitar, the factual block of information is the information "my old", wherein the factual block of information is based on, e.g., photos/videos/acoustic examples of the guitar that represent factual information files.

In this respect, it is pointed out that the ML ID modules used in the training phase are the same ML ID modules that are used when processing new raw data to extract a first cognitive block of information.

A group of information in the first database may also be referred to as "personal model" as a cognitive block of information automatically provided by an ML ID module is supplemented with additional specific information chosen by a person/user.

As discussed above, when searching the first database for groups of information that comprise the same cognitive block of information, and if such group of information is found, a determination is made if the raw file that is processed is semantically identical to at least one of the at least one factual information files that are associated with the factual block of information of such group of information. The determination if the raw file is semantically identical to at least one of the factual information files in an embodiment includes semantically comparing, using at least one machine learning comparison module, ML CP module, the raw file with at least one of the factual information files. To this end, both the raw file and the at least one factual information file are input into the ML CP module for comparison. A semantical identity is found if a configurable threshold is reached by the comparison result output from the ML CP module.

Accordingly, the processed raw file is processed in the factual extraction phase by a machine learning module again, however, this time by comparing the raw file with another file and determining semantical identity (wherein, in the cognitive extraction phase it was processed by a machine learning module for identifying content). A semantical identity is found if a configurable, pre-definable threshold is reached, such as a threshold of 90 percent or the like.

In other words, in the factual extraction phase, the raw file that is still in processing is compared by machine learning artificial intelligence with the factual information file or files associated with a block of factual information to identify if the semantical content is the same or not. If the content is the same this means that the processed file receives the factual block of information of the respective group of information in the first database. The process may be repeated with respect to several groups of information which contain the same cognitive group of information.

For a cognitive block of information extracted from the raw file for which no identical cognitive block of information exists in the first database, or for which an identical cognitive block of information exists but there is no match with respect to semantic identity with the factual information files associated with the factual block of information, an unknown factual block is created. In the latter case, the created meta pair comprises a cognitive block of information and an unknown factual block of information.

By comparing in the factual extraction phase the processed raw file semantically with the factual information files stored in the first database, it is possible to determine if the factual block of information is an unknown factual block or is a factual block of a personal model.

To give an example, if "a guitar" is the output of the cognitive extraction phase and thus the cognitive block of information, in the factual extraction phase it is searched in the first database for groups of information which contain as cognitive block a guitar. With respect to those groups of information (which may be one or several), the factual information files associated with the factual block of information of that group of information are semantically compared with the raw file. If semantical identity is found, then the factual block of information of that group of information is the correct factual information and picked as factual block of information of the processed raw file. The respective meta pair, in such case, may be "Guitar, MyOldGuitar", wherein "Guitar" is the cognitive block of information and "MyOldGuitar" is the factual block of information.

If semantical identity is not found, then the factual block of information is set to be an unknown factual block. In such case, the respective meta pair may be "Guitar, Unknown", wherein "Unknown" is the factual block of information in that example.

In a further embodiment, the method comprises the further steps that
- each cognitive block of information of a meta pair comprises a first signature,
- each factual block of information of a meta pair comprises a second signature,
- wherein each meta pair is identified by a meta pair signature comprising the first signature and the second signature.

This aspect of the invention identifies a signature with each cognitive block and a signature with each factual block. The two signatures together form or are a part of the signature of a meta pair. Accordingly, the cognitive block signature and the respective factual block signature automatically identify and index the second database.

When searching the first database for groups of information that comprise the same cognitive block of information, in an embodiment, the search is based on the signature of the cognitive blocks of information. Accordingly, during the search in the first database, it is looked for a group of information with a cognitive block of information having the same signature as the cognitive block of information of the processed raw file.

In this respect, it may be provided that the signature of the cognitive block of information and the signature of the factual block of information are each inherited from the respective ML ID module that was used to extract the respective block from raw data. The ML ID module used to provide the cognitive block of information gives a name to the content of the cognitive block which is its signature. For example, the name/signature for "Guitar" may be "CB1". In a similar manner, the ML ID module used to provide the factual block of information gives a name to the attribute of the factual block which is its signature. For example, the name/signature for "old" may be "FB1". Accordingly, any cognitive content and any factual attribute have their own name or signature.

The signature of the cognitive block of information thus stems from the ML ID model that was used to extract the meaning from the real-time data/raw file. The signature of the factual block of information stems from the ML ID model that was used to extract the meaning from the factual information files.

It is pointed out that the signature of the cognitive block of information is unique only in that it is specific for a specific object. For example, the signature "CB1" may identify a guitar. The signature "CB1" is not used for any other object than a guitar, but it is not specific for any user. Accordingly, a cognitive block of information is the same across all users and has the same signature for all users. To give an example, the cognitive block for a guitar ("CB1" in the above example) has the same signature for all users of the method and system. The signature for the factual block of information, on the other hand, is unique in that it is a unique signature of a particular user. As the factual block of information is a result of a private model provided for by a user, the signature is user specific and unique for the user.

In the invention, a particular handling of the first factual block of information of a new meta pair is provided for in case that the first factual blocks of information in already existing ("old") meta pairs of the second database comprise unknown factual information, as is the case, e.g., if during the search in the first database no group of information had been identified that comprises the first cognitive block of information. In such case each time a new meta pair is logged into the second database that comprises a first factual block of information from a personal model of the first database (i.e., is not unknown but comprises personal information) the second database is updated by
- searching for all meta pairs of the second database which have the same first cognitive block of information,
- for each matching meta pair with the same cognitive block of information and with a factual block of information that is unknown factual information, compare the factual block of information of that matching meta pair with the factual block of information of the new meta pair, the comparison comprising comparing the respective raw files, wherein if the respective raw files are semantically identical the factual block of information of the matching meta pair is replaced by the factual block of information of the new meta pair, meaning that the new meta pair replaces the matching old meta pair (as the cognitive block of information is also the same).

It is pointed out that again the respective raw files are compared. This is possible as the second database comprises in its entries a link to the respective raw file. To compare if the respective raw files are semantically identical, an ML CP module is used as previously discussed.

The invention allows to update past entries in the second database by replacing in previously stored meta pairs first factual blocks of information which previously comprised unknown factual information (which is semantically meaningless) with newly found first factual information from the first database. Meta pairs with unknown information are replaced by meta pairs with meaningful (personal) information. For example, since the past entries, a user has updated the first database by adding a further group of information which comprises meaningful first factual information relating to a cognitive block of information. With that additional information, previously stored unknown first factual blocks of information related to the respective cognitive block of information can now be updated. The second database, accordingly, can constantly automatically update and improve itself, also with respect to past entries.

In an embodiment, the replacing the factual block of information of the new meta pair by the factual block of information of a matching meta pair is implemented by replacing the signatures of the respective factual blocks of information. As previously discussed, the signatures fully identify the respective blocks of information.

According to the intention, each time a new meta pair is logged into the second database the second database is updated by:
- searching for all meta pairs of the second database which have the same first cognitive block of information,
- for each matching meta pair with the same cognitive block of information, compare the respective raw files by an ML CP module as to their semantic, wherein if the semantics of the respective raw files are identical the factual block of information of the matching meta pair replaces the factual block of information of the new meta pair, meaning that the matching meta pair replaces the new meta pair (as the cognitive block of information is also the same). Thereby, a new first factual block of information is referred to a previously stored first factual block of information if the raw file is the same.

It is pointed out that again the respective raw files are compared. This is possible as the second database comprises in its entries a link to the respective raw file. To compare if the respective raw files are semantically identical, an ML CP module is used as previously discussed.

According to the invnetion, if the information extracted on a similarity level between the respective two raw files are identical for two unknown factual blocks that share the same cognitive block in their existing meta pairs, the replacement of the factual block from the newer file is done with the factual block of the older file, respectively a meta pair with an unknown factual block is replaced with the meta pair of the other factual block if it is understood that after processing the raw files of those the two facts are identical/similar to a certain configurable threshold. To give an example, if there is a picture with a guitar that is unknown and there is another picture with an unknown guitar, both having the same cognitive block "guitar" and different factual unknown blocks, if the ML module considers the guitars are the same in both the pictures, the meta pair of the latest added guitar is replaced by the meta pair of oldest added guitar.

The invention avoids duplicates in the second database and makes sure that for the same raw file one meta pair is used only. This way, the first database is secured to be ordered chronologically, respecting the entry time of a meta pair, and removing duplication entries for identical raw files in the second database. The new meta pair is replaced by a reference to the matching meta pair.

It is pointed out that such update can take place both for first factual blocks of information which contain unknown factual information and for first factual blocks of information which regard information of a previously stored group of information (personal information).

According to the invnention, prior to processing a digital raw file a check is made if the digital raw file has already been processed, the check comprising
- compare the digital new raw file with previously input digital raw files stored in a third database of a computer device and/or computer system (which will be later described as a third, "pre-cortex" ledger),
- wherein, if an identical raw file is found, the new raw file is associated with the meta pair of information previously provided by the processing of the identical raw file;
- wherein, if an identical raw file is not found, the digital raw file is further processed, wherein a new entry is created in the third database for the raw file.

The invention regards a pre-filtering of new raw files as to whether such raw files have already been processed. If so, these raw files are bypassed and not processed as to the determination of a meta pair again. This way, processing capacity can be reduced. With pre-filtering, it is not the semantic content of the files that is compared but the files themselves are compared.

According to the invention the third database holds time-stamped information about all raw files and data sources that were previously processed. The third database is searched to look for similar raw files.

In the invention, comparing the digital raw file with previously input digital raw files for identity comprises using at least one of the date, timestamp, geolocation, file size and file name for comparison. Further, the comparison of raw files may be implemented on a statistical similarity level. A matching threshold may be defined.

In a further embodiment, the method of the present invention further comprises:
- comparing meta pairs of information in the second database for meta pairs having the same first cognitive block of information or the same first factual block of information,
- wherein information about meta pairs with corresponding blocks of information is stored together with the meta pairs.

This aspect of the invention allows to create affinity pools of corresponding meta pairs of related information, this allowing to relate and retrieve a plurality of meta pairs which together form a or participate in a memory of a user. The affinity pools form virtual groups of similarities between entire meta pairs, or cognitive and factual blocks or combinations of many of them. Affinity pools are critical because they help generate not only deep relational structures but also shortcut the navigation between meta pairs and the memories that they refer to. Affinity pools can be used to identify the relations between memories without the need to parse entirely the second database. They facilitate direct jumps or zooms into specific memories.

In an embodiment, each group of information of the first database is organized as a folder, a table and/or a sequence of referencing folders or tables. Any format suitable for grouping information may be implemented.

In the invention, the first database is organized as a first ledger having a plurality of entries, wherein each entry of the first ledger comprises at least a first cognitive block of information, a first factual block of information, and a reference to at least one factual information file. These three elements together may be termed a "meta chain". Such meta chains of information are also included in the second database. In particular, the second database is formed by entries called "meta chain entries", wherein the meta chain entries comprise as elements the meta pairs and the respective cognitive blocks of information and factual blocks of information, wherein the meta chain entries may contain additional information.

The information of the first ledger may be organized such that
- the cognitive block of information is included in an entry of the first ledger that comprises a table that refers to a public models table, the public models table identifying a ML ID module and a storage source, and
- the factual block of information is included in an entry of the first ledger that comprises a table that refers to a private models table, the private models table identifying a ML CP module, a storage source for the at least one factual information file and personal information.

More particularly, the storage source of the public models table is the storage source of the raw file from which the cognitive block of information was extracted. The ML ID module is the module used to extract the cognitive block of information. The storage source of the private models table is the storage source of the at least one factual information file associated with the corresponding factual block of information. The identified ML CP module is the module used to compare the raw file and the at least one factual information file.

This organization of information allows to further reference the information in the cognitive block and the factual block to tables which then include the relevant information about the file storage space for the raw file and for the factual information files, the ML ID module and the ML CP module. This allows to reduce the amount of data stored in the first database. In case the second database references back to the first database, the respective information in the tables is also available for the second database. Alternatively, in principle, the second database may refer directly to the public models table and the private models table.

It may be further provided that each entry of the first ledger that comprises a factual block of information comprises an element defining if content of the factual block of information is unknown factual information or factual information from the first database. This allows to update the second database (meta-chain ledger) in a simple manner when searching if a new factual block of information may be used to replace previously stored factual blocks of information with unknown factual information, as discussed above.

In the invnetion, the third database is organized a third ledger having a plurality of entries, wherein each entry of the third ledger comprises at least a digital raw file or a reference to the storage space of the digital raw file and a timestamp of the digital raw file. The third ledger may also be referred to a "precortex ledger" as it preprocesses data similar to the precortex of the human mind. The third database/ledger is particularly used for the above-discussed prefiltering of new raw files as to whether a meta pair already exists for the raw file.

In the invention, the second database is organized as a second ledger having a plurality of entries, wherein each meta pair of information and the reference to the respective raw file used to extract the cognitive block of information is written into an entry of the second ledger. The second ledger may also be referred to a "meta chain" ledger, wherein the entries of the meta chain ledger contain "meta chains" comprising a first conceptual block of information, a first factual block of information and a reference (direct or indirect) to the raw file used to extract the cognitive block of information. The reference to the raw file may be a reference to the third ledger.

It is further pointed out that each meta chain entry of the second ledger may comprise a plurality of first cognitive blocks of information, first factual blocks of information and corresponding meta pairs. This may be the case as a plurality of meta pairs can be extracted out of one raw file by applying a plurality of ML models to the raw file and determining the respective cognitive and factual blocks of information.

It may be provided that the entries of the second ledger each additionally comprise as further element a reference to the entry of the third ledger in which the digital raw file or a reference to the storage space of the digital raw file is stored. The reference to the respective entry may be an ID or signature of the respective entry.

The first ledger may be stored at a user device such as a smartphone or tablet computer and the second ledger and the third ledger may be stored in a computer network. However, in principle, all three ledgers may be implemented in a same centralized or decentralized computer system. The system can be deployed in parallel on multiple devices that collect data on behalf of a user and each of them indexes based on a chronological and time-stamped order the relation between the data captured and the semantic meaning from present and past. The raw data can be stored anywhere and the second database can recreate the access path to any file of these files based on the information inherited during the pre-cortex processing and referenced in the pre-cortex ledger.

In a further embodiment, the meta pairs of information in the second database are compared to meta pairs of information of second databases of other users to determine affinity between different users on the basis of the cognitive blocks signature matching. This allows to expand the inventive concept to several users. This way, the relation between multiple user memories can be recreated on a higher network level by colliding and mapping multiple user ledgers based on location, timestamp, cognitive blocks, device, and device connectivity area. Multiple users memories in the same date, time, or location can easily be reconstructed by merging the ledgers of these users and validating where the overlapping moments are and what was backed up for each of the users. The source of alignment is always time as it handles the proof of history of the events and mapped memories and indicates the present moment of the verification.

Further, it may be provided that different users share their databases and the memories made available through these databases without having a centralized authority.

In a further embodiment, the method further comprises providing, upon a query of the user, information stored or referenced in the second database, wherein the query comprises identifying a least one of a point or period in time, a first cognitive block of information, a first factual block of information and a meta pair of information. The provided information may comprise references to raw files and/or factual information files associated with the results of the query. Further, the provided information may be displayed by a user device application, wherein the user device application is adapted to navigate to the respective raw files. Accordingly, a user can easily access information related to a memory.

In case the query provides as information a meta pair and a reference to a raw file associated with the meta pair, and further in case that the reference has been deleted or damaged or that the raw file does not exist anymore, the method may further comprise:
- searching in the second database for meta chain entries which contain the meta pair provided by the query,
- if finding such meta chain entry, using the reference to the raw file associated with that meta chain entry as reference to the raw file for the present query.

This aspect of the invention allows to reconstruct references to raw files that have been deleted. For reconstruction meta chain entries with similar meta pairs are used.

In a further embodiment, the method further comprises the user being able, through a user device application, to navigate through the second database to locate first cognitive blocks of information, first factual blocks of information and meta pairs including navigating through different blocks of the second database having meta pairs of information with corresponding first cognitive blocks of information and/or first factual blocks of information.

As discussed, the method of the present invention may be used to digitally backup long-term memories of a user, wherein the memories are formed by the events or facts with respect to which data are collected, organized and stored.

It is to be noted that the inventive method is intended to be carried out by a plurality of users. This allows to expand the method by enhancing memories through the interaction of the databases of a considered user with the databases of other users. Multiple users memories of the same date, time, and/or location can be reconstructed by merging the second databases of these users and validating where the overlapping moments are and what was backed up for each of the users.

When the method of the present invention is used by a plurality of users, it is to be noted that the cognitive blocks of information contain the same signatures for all users. The factual blocks of information are each the result of a personal model and have unique signatures which are unique for each factual block and user.

The present invention comprises a data processing system of collecting, organizing and storing data relating to the memories of a user, the system comprising:
- one or more processors;
- a storage device operatively coupled to the one or more processors and having program instructions stored therein, which when executed by the one or more processors configure the one or more processors to carry out the method of claim 1.

The invention regards a computer program product comprising instructions which, when the program is executed by a computer or computer system, cause of the computer or computer system to carry out the method of any of the preceding method steps.

The invention will be explained in more detail on the basis of exemplary embodiments with reference to the accompanying drawings in which:
- FIG. 1: an overview of a computer-implemented system of collecting, organizing and storing data relating to the memories of a user, the system comprising an input module, a preprocessing "pre-cortex" module, a main processing "active cortex" module, a first database, a second database, a third database and storage means;
- FIG. 2: a flowchart of a method of collecting, organizing and storing data relating to memories of a user;
- FIG. 3: details of the method of claim 1 with respect to searching a first database comprising stored groups of information, the stored groups of information comprising cognitive blocks of information and factual blocks of information;
- FIG. 4: a flowchart of a method used in a training phase to build up a first database comprising stored groups of information, the stored groups of information comprising cognitive blocks of information and factual blocks of information;
- FIG. 5: an example embodiment of a system used in the training phase of FIG. 4;
- FIG. 6: an example of cognitive blocks of information in accordance with the present invention;
- FIG. 7: an example of factual blocks of information in accordance with the present invention;
- FIG. 8: a particular example of an entry having a table that includes a cognitive block of information;
- FIG. 9: a particular example of an entry having a table that includes a factual block of information, the factual block of information being associated with a plurality of factual information files;
- FIG. 10: schematically the pairing of cognitive blocks of information and of factual blocks of information to meta pairs of information;
- FIG. 11: a further example of meta pairs of information similar to FIG. 10;
- FIG. 12: an example embodiment of the databases of FIG. 1 organized a first ledger, a second ledger and a third ledger, the second ledger storing meta pairs of information, the first ledger storing groups of information provided in a training phase, and the third ledger storing references to raw files of information;
- FIG. 13: the use of public models tables and private models tables to organize information stored or referenced in the first ledger of FIG. 13;
- FIG. 14: examples of information stored as entries in the second ledger of FIG. 13;
- FIG. 15: a schematic depiction of prefiltering of newly input raw files in the "pre-cortex" module of the system of FIG. 1;
- FIG. 16: a schematic depiction of data processing to determine cognitive blocks of information and factual blocks of information in the "active cortex" module of the system of FIG. 1;
- FIG. 17: an enlarged view of parts of the module of FIG. 17;
- FIG. 17A: an example of steps performed during a cognitive extraction phase;
- FIG. 17B: an example of steps performed during a factual extraction phase;
- FIG. 18: a schematic depiction of relating meta pairs of information in different entries of the second database of FIG. 1 in affinity pools;
- FIG. 19: schematically a method of identifying duplicates between unknown old blocks of information and new blocks of information in the system of FIG. 1;
- FIG. 20: a schematic depiction of a staking process to determine if factual blocks of information associated with a new raw file have previously been stored in the second database of FIG. 1;
- FIG. 21: schematically the flow of processing of an input raw file to a meta pair entry in the second database of FIG. 1;
- FIG. 22: schematically the retrieval of information by a user of information stored in the second database of FIG. 1, using a user device software application;
- FIG. 23: schematically a synchronizing process with respect to data stored in a different devices; and
- FIG. 24: schematically the sharing of the stored information relating to memories between a plurality of users.

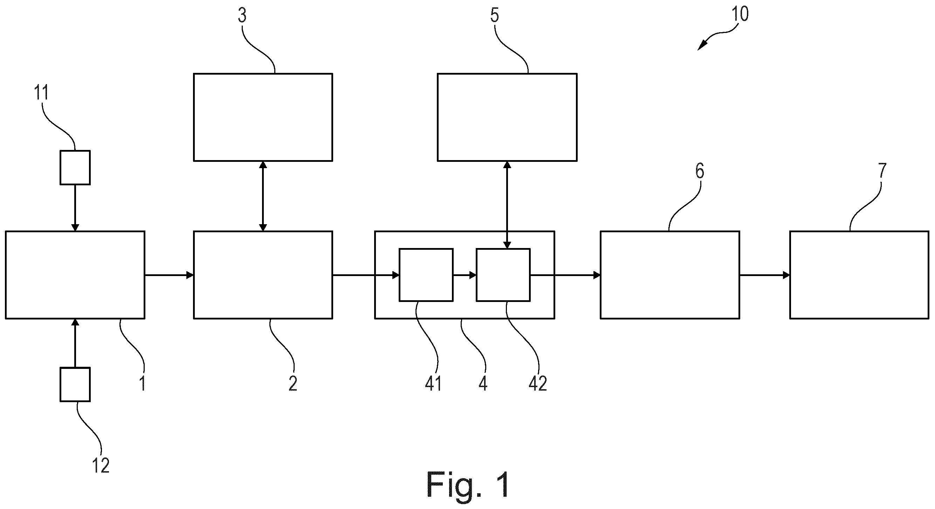

FIG. 1 is an overview of an embodiment of a system implementing the present invention. The system 10 comprises an input module 1, a preprocessing module 2, a third database 3 interacting with the preprocessing module 2, a main processing module 4, a first database 5 interacting with the main processing module 4, a second database 6 and storage means 7.

The preprocessing module 2 will in the following also be referred to as "pre-cortex module" in analogy to the prefrontal cortex of the human brain. The third database 3 that interacts with the preprocessing module 2 will also be referred to as "third ledger" or "pre-cortex ledger". The main processing module 4 will in the following also be referred to as "active cortex" in analogy to the motor and visual cortex of the human brain. The first database 5 interacting with the main processing module 4 will in the following also be referred to as "first ledger" or "block ledger". The second database 6 will in the following also be referred to as "second ledger" or "meta chain ledger".

The input module 1 automatically receives data relating to events or facts that may form memories of a human user. The data are collected by and received from one or several sensor sources 11 and/or digital sources 12. The input module 1 separates the collected data into a plurality of digital raw files and timestamps the digital raw files.

The timestamped digital raw files are then provided to the pre-cortex module 2, which will be described in more detail later and which primarily serves to pre-check by inquiring the third database 3 (pre-cortex ledger) as to whether a received digital raw file had been received previously, in which case a shortcut around the subsequent main processing module 4 is made to the second database 6. In such case, no new entry is created for the file in the third database. If a newly received raw file has not been received before, a new entry is created in the third database referencing the file, file type, its storage space and potentially other details. Also, the file is provided to the main processing module 4.

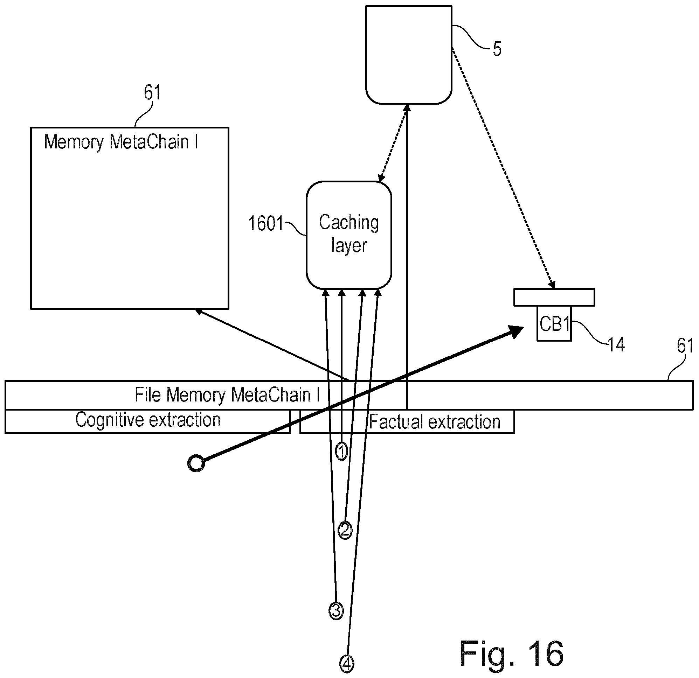

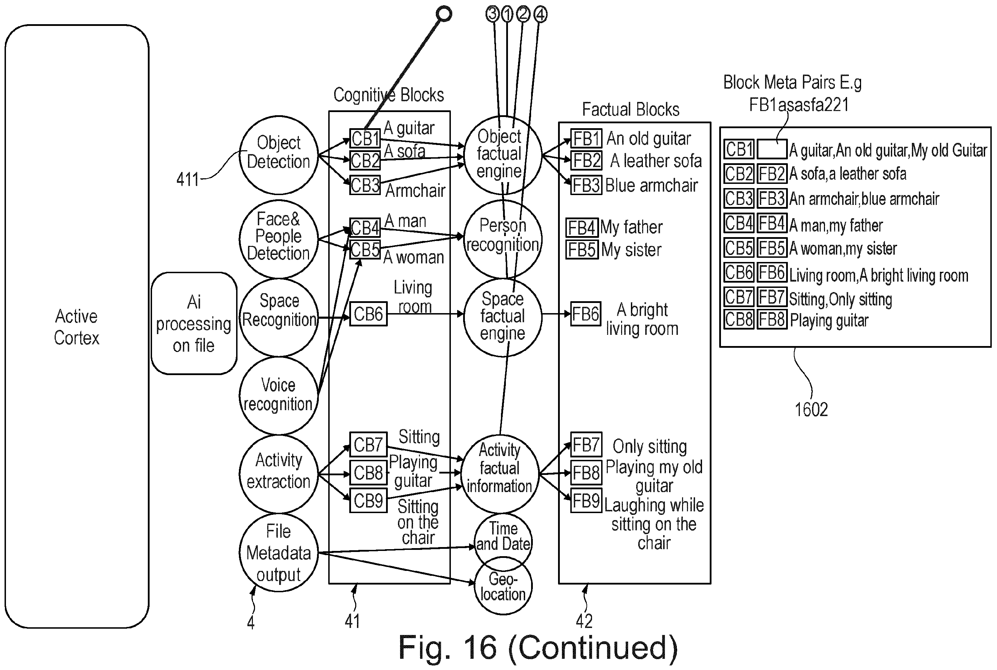

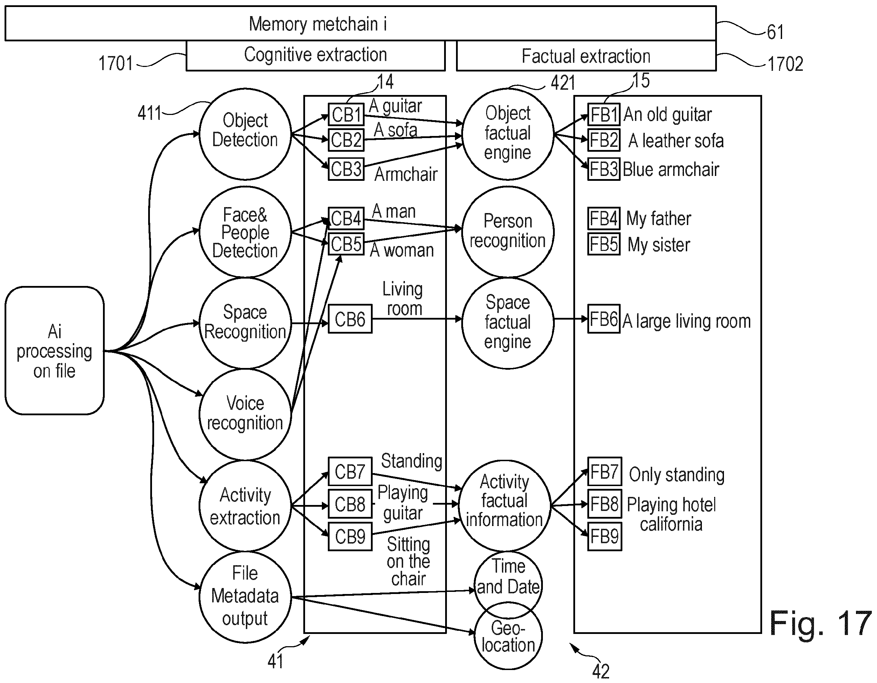

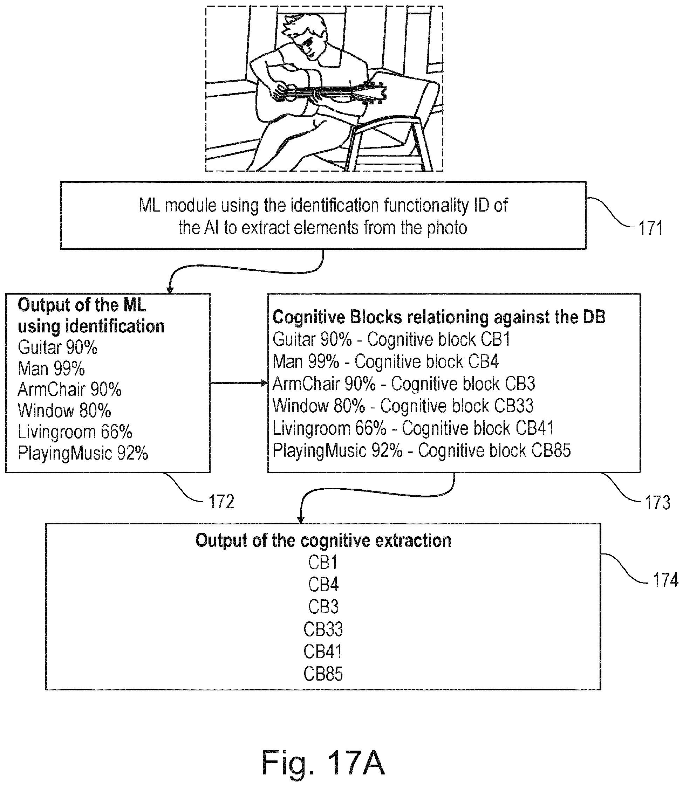

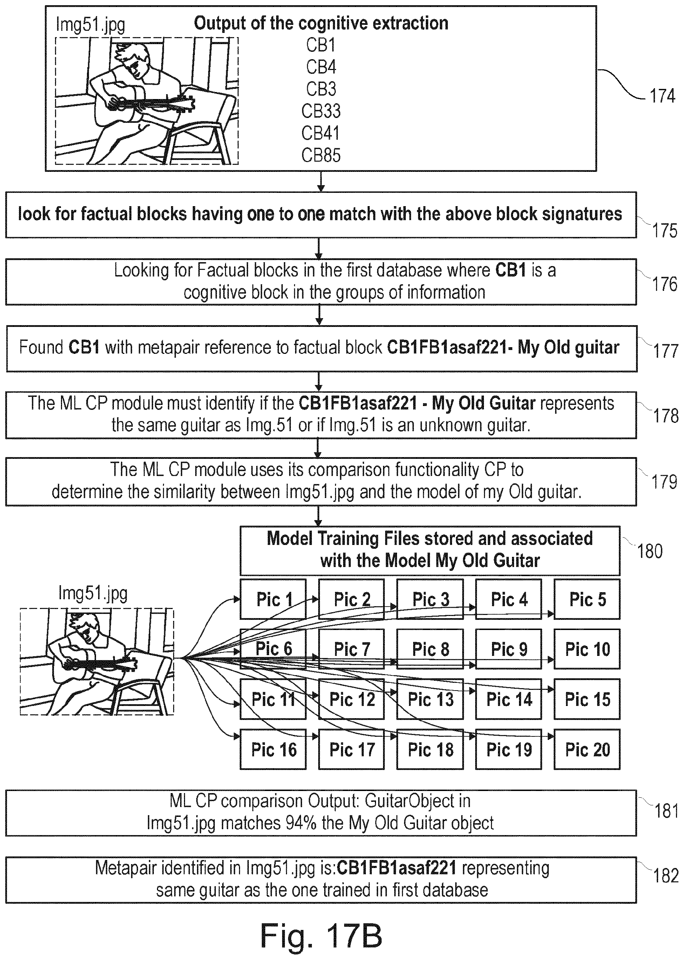

The main processing module 4 comprises a first functionality block 41 and a second functionality block 42. In the first functionality block 41, the raw file is input into at least one machine learning identification module, referred to as ML ID module. As will be discussed with respect to FIGs. 16 and 17, a raw file may be input into at least one of an Object detection ML ID module, a face and people detection ML ID module, a space recognition ML ID module, a voice recognition ML ID model, an activity extraction ML ID module, and a file metadata output ML ID module. Further ML ID modules may be provided. These ML ID modules are state of the art ML modules which have been trained in accordance with the state of the art. The ML ID model on which the raw file is run depends on the file type. In particular, the first functionality block 41 chooses the ML ID model or ML ID models based on the file type inherited from the entry newly created in the third database 3.

The machine learning modules are machine learning identification (ID) modules in that they identify content in the raw file such as persons or objects.

The raw file may be run on several ML ID modules. For example, a picture file may be run on an Object detection ML ID module and a face and people detection ML ID module. A sound file may be run on a voice recognition ML ID module. This will be explained in more detail with respect to FIGs. 16 and 17.

The respective ML ID module provides for a semantic output, which in the context of the present invention is called a cognitive block of information. Automatically providing for cognitive blocks of information based on input raw files is one main activity of the main processing module 4. An example for a cognitive block of information is "guitar" if the raw file is the photo of a guitar, wherein the ML ID module determines that the photo shows a guitar. The semantic information "guitar" is provided with a unique signature that identifies the "guitar" and that is inherited from the respective ML ID module. The signature of the semantic information, however, is unique only with respect to the object (such as "guitar"). The signature of a cognitive block of information is not user specific and the same across all users.

The second main activity of the main processing module is implemented by the second functionality block 42. In the second functionality block 42, for each cognitive block of information a factual block of information is created which refers to and supplements the cognitive block of information. For example, a factual block of information in the above example may be "my old guitar" or "my Dad's guitar". The factual block of information comprises at least one attribute (such as "my old" or "my Dad's) relating to the cognitive block of information.

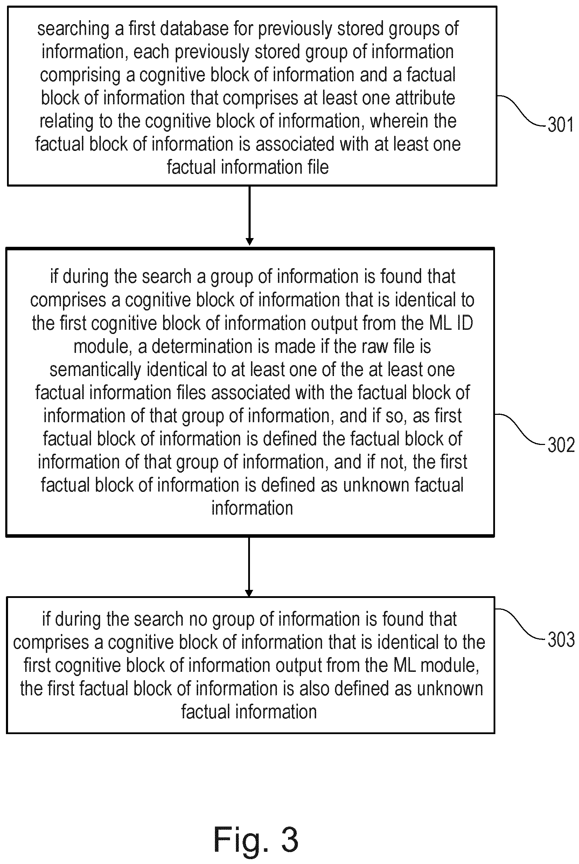

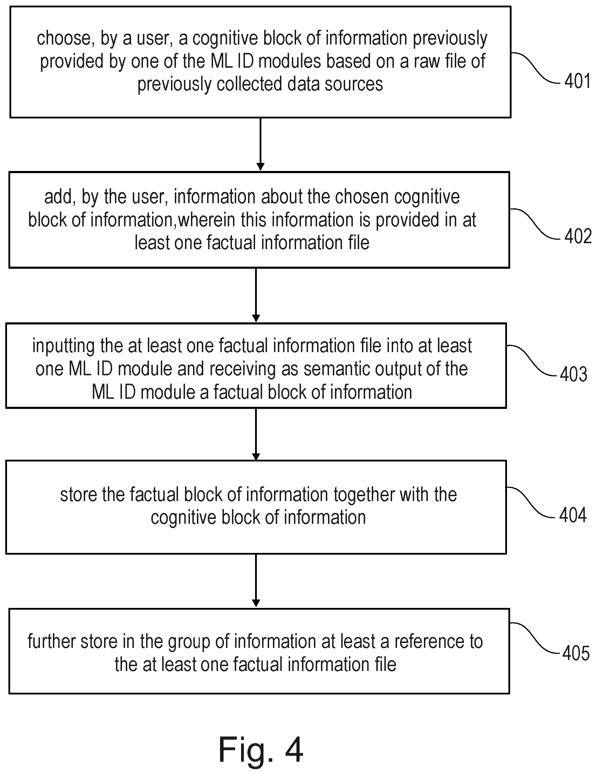

A factual block of information is created by interaction with the first database 5 (so called "block ledger"). In the first database 5, a plurality of groups of information is stored. Each group of information comprises a cognitive block of information, a factual block of information and at least one factual information file associated with the factual block of information. A group of information with these elements is also referred to as a "meta chain". Each group of information has been input into the first database 5 in a training phase involving the user, as will be discussed with respect to FIG. 4. The second functionality block 42 searches the first database 5 in that it is searched for a group of information that contains a cognitive block of information that is identical to the cognitive block of information output from the ML ID module in functionality block 41. If such group of information is found, it is further determined if the processed raw file is semantically identical to at least one of the factual information files associated with the factual block of information as will be discussed in more detail with respect to FIG. 3. If so, the factual block of information of that group is picked and chosen as factual block of information for the considered raw file. If the search is negative, the first factual block of information is defined as an unknown factual information.

Accordingly, the main processing module 4 provides as output from the processing of the raw file at least one, but in many cases a multitude of cognitive blocks of information and respective factual blocks of information. A factual block of information always refers to one particular cognitive block of information and cannot stand on its own. The cognitive block of information and the factual block of information are paired into a so-called meta pair of information. In other words, a meta pair of information is a cognitive block of information and a corresponding factual block of information. Dependent on whether the search in the first database 5 leads to the identification of a factual block of information, the meta pairs may contain factual blocks of information from an entry in the first database (called "personal model" information) and meta pairs that contain factual blocks with unknown factual information. The meta pairs are formed in the main processing module 42.

Each meta pair of information is subsequently logged into an entry of the second database 6 together with a reference to the respective raw file which had been processed and used to extract the cognitive block of information. In particular, there is provided a reference to the entry in the third database 3 (pre-cortex ledger) that had been created for the considered file. Further, details of the processing can be included in the entry.

Generally, all three considered databases 3, 5 and 6 may be implemented as ledgers, wherein each ledger comprises a plurality of entries and wherein in each entry information related to a raw file is stored. The ordering principle of the ledgers 3, 5 and 6 is time such that the timestamp decides about how the information is organized in entries.

The second database (second ledger) 6 which comprises meta pairs of information and references to the respective raw file is in the following also referred to as "meta chain" ledger 6. The meta chain ledger is organized such that in includes a plurality of entries called "meta chain entries". Each meta chain entry includes as elements at least one cognitive block of information and at least one factual block of information and thus at least one meta pair (but possibly a plurality of meta pairs) as well as a reference to the respective raw file.

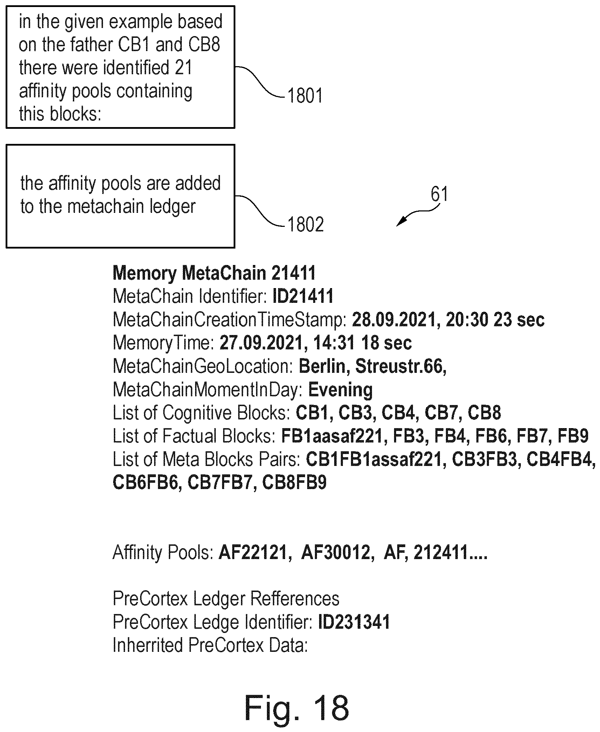

A plurality of methods may be applied to the second database 6 to update the second database, to avoid the presence of duplicates in the database, and to relate different entries of the second database to each other in affinity pools, as will be described with respect to FIGs. 18 to 20 in more detail.

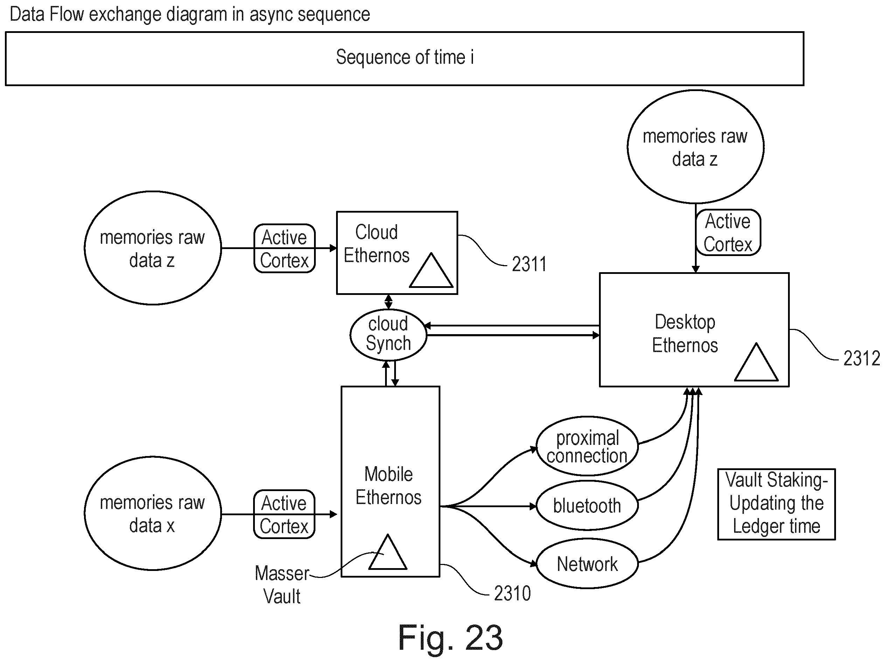

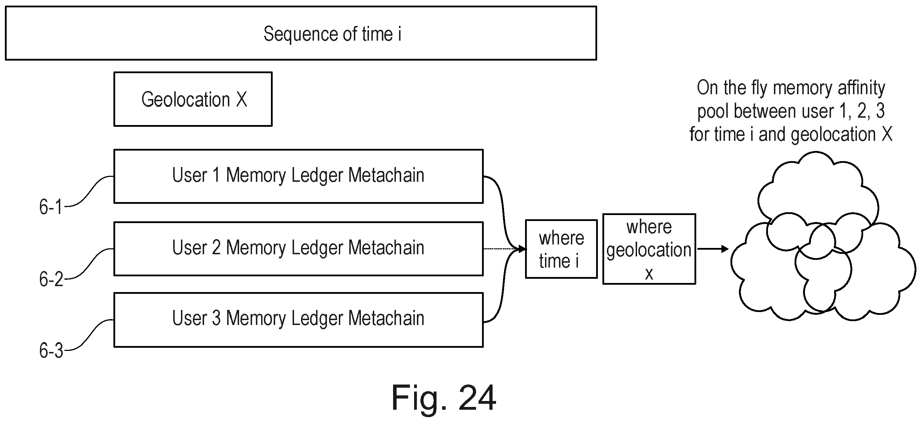

A schematically depicted storage space 7 is provided for storing the second database/meta chain ledger 6 and the raw files or references to the raw files. The storage space 7 may be a local storage space in a device running a user application allowing a user to navigate through the system of FIG. 1, input information into the first database 5 and query the second database 6. Alternatively, storage space 7 may be a multiple device storage, wherein the second database is stored on multiple devices that collect data asynchronous on behalf of the same user as discussed in more detail with respect to FIG. 23. A further alternative, the storage space 7 is a multiple device storage wherein the second database is stored on multiple devices of different users and wherein the second database of each user is shared with other users, as is discussed in more detail with respect to FIG. 24. In a still further alternative, the second database and/or raw files or references to the raw files are stored in a cloud decentralized container dedicated to each user.

The first database 5 and the third database 3 may be stored in a similar manner.

In an embodiment, the information provided in the second database 5 is stored at a user device, wherein information provided in the second database 6 and the third database 3 is stored on a separate storage space including possibly a cloud storage.

The functionality of modules 1, 2 and 4 is provided for by computer software run on one or several processors located in one or several computers or a network of computers. The computer software is stored in one or more storage devices such as memory chips. The first, second and third database 3, 5, 6 are implemented in storage space in one or several computers or separate databases as discussed and interacting with the modules 1, 2 and 4 in the manner described.

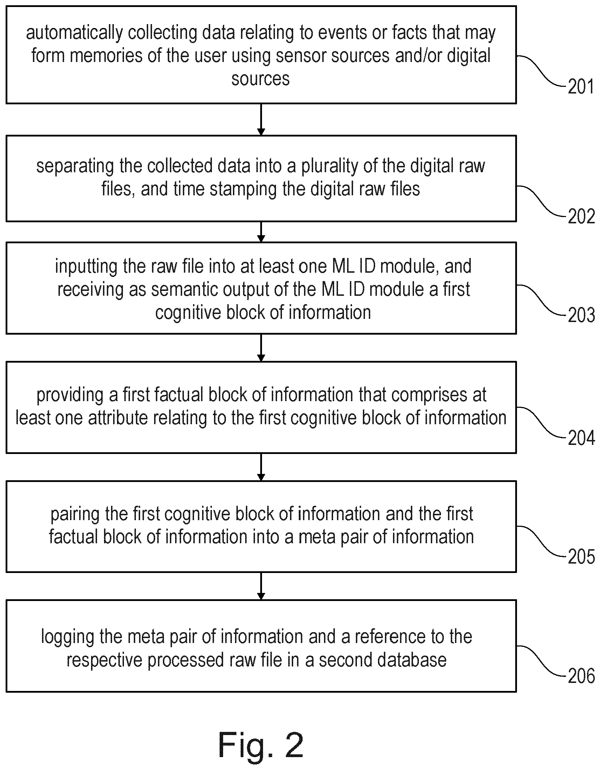

FIG. 2 is a flowchart of the main process steps implemented by the system of FIG. 1. In step 202, data relating to events or facts that may form memories of a user are automatically collected using sensor sources and/or digital sources. In the step 202, the collected data is separated into a plurality of digital raw files, wherein the digital raw files are time stamped. In step 203, each raw file is input into at least one ML ID module, wherein a first cognitive block of information is received as the semantic output of the ML ID module. In step 204, a first factual block of information is provided that comprises at least one attribute relating to the first cognitive block of information. The exact manner in which the first factual block of information is provided is discussed with respect to FIG. 3.

Subsequently, in step 205, the first cognitive block of information and the respective first factual block of information are paired into a so-called meta pair of information. In step 206, the meta pair of information is logged together with a reference to the processed raw file in a second database which is stored in a computer device and/or computer system.

Accordingly, raw data is processed such that for each digital raw file a pair of a cognitive block of information and a factual block of information is created. The creation of the factual block of information is described with respect to FIG. 3.

As discussed with respect to FIG. 1, the basis is a database (the first database in FIG. 1) in which a plurality of groups of information is stored. Each group of information comprises a cognitive block of information, a factual block of information and at least one factual information file associated with the factual block of information of that group of information. The manner in which the database can be created is discussed with respect to FIG. 4. In step 301 of FIG. 3, the first database is searched for previously stored groups of information, each group of information comprising a cognitive block of information and a factual block of information that comprises at least one attribute relating to the cognitive block of information, wherein the factual block of information is associated with at least one factual information file. In embodiments, the stored information is organized in the first database as a folder, a table and/or a sequence of referencing folders or tables.

According to step 302, if during the search a group of information is found that comprises a cognitive block of information that is identical to the first cognitive block of information output from the ML ID module (step 203 in FIG. 2), a determination is made if the processed raw file is semantically identical to at least one of the at least one factual information files associated with the factual block of information of that group of information. If so, the respective factual block of information is read from the first database and provided as factual block of information. If not, the first factual block of information is defined as unknown factual information.

To determine if the processed raw file is semantically identical to at least one of the at least one factual information files associated with the factual block of information at least one machine learning comparison module, ML CP module, is used. Both the processed raw file and the at least one factual information file are input into the ML CP module for comparison. A semantical identity is found if a configurable threshold is reached by the comparison result output from the ML CP module. Depending on the number of factual information files associated with the factual block of information, the processed raw file is compared this way with one or several factual information files (sequentially or parallel). The comparison for semantical identity thus takes place by using a comparison functionality of a machine learning module.

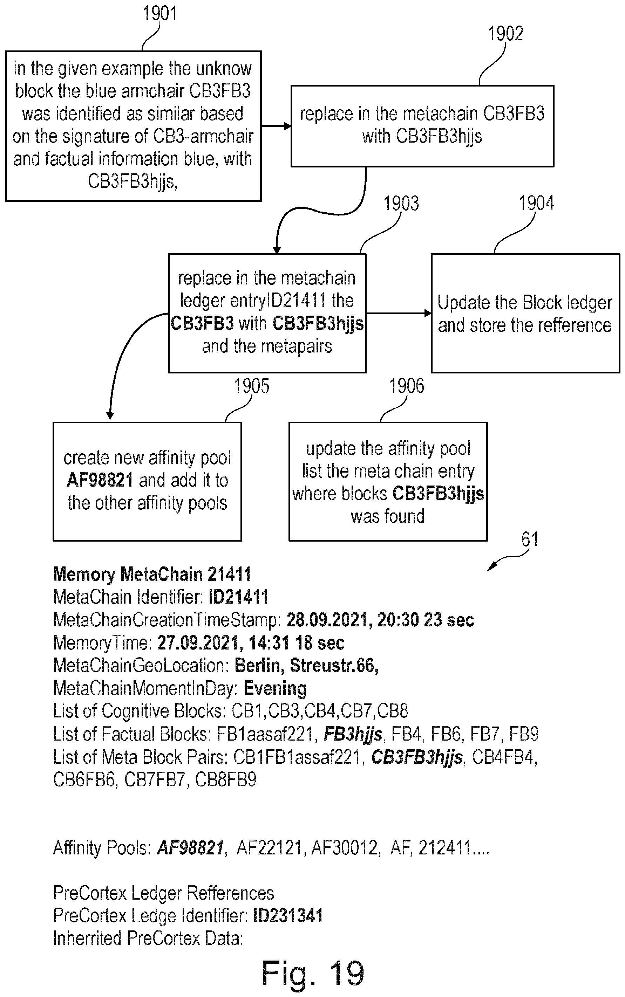

Further, according to step 303, if during the search no group of information is found that comprises a cognitive block of information that is identical to the first cognitive block of information output from the ML ID module, the first factual block of information is also defined as unknown factual information. The factual block of information may thus comprise an entry that defines if content of the factual block of information is unknown factual information or factual information from the first database. This is important with respect to a feature of the second database discussed with respect to FIG. 19 that allows to update blocks of unknown factual information with blocks of "personal model" information input into the first database at a later time.

As is clear from the above description, it is important for the formation of the factual blocks of information that the first database (database 5 of FIG. 1) exists and stores groups of information referred to as meta chains. These groups of information are built step-by-step by user interaction. FIG. 4 shows the respective method. The method starts in step 401 with a user choosing a cognitive block of information that has previously been provided by one of the ML modules based on a raw file of previously collected data sources. Accordingly, the user starts with a cognitive block of information that has been provided in the same manner as for any new raw file as discussed with respect to FIG. 1.

In step 402, the user adds information about the chosen cognitive block of information, wherein this information is provided in at least one factual information file. In step 403, the at least one factual information file is input into at least one ML ID module. As semantic output of the ML ID module a factual block of information is received.

In step 404, the factual block of information is stored together with the cognitive block of information. In step 405, it is further stored in the considered group of information at least a reference to the at least one factual information file.

By such steps, the first database can be built step-by-step by interaction with a user through a software interface that allows a user to associate personal information with a selected cognitive block of information. This way, the user pre-trains the system to store groups of information that are relevant and of importance to the user. It is important to note that the first database can always be further improved by adding further groups of information and is never complete.

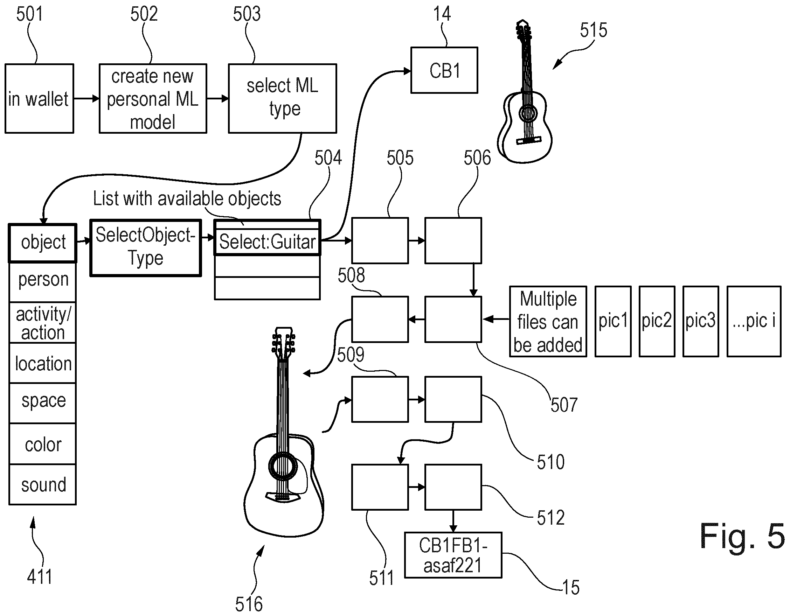

FIG. 5 is a more detailed embodiment of the method of FIG. 4, wherein the provision of a first cognitive block of information and of a first factual block of information is shown by the example of a guitar.

The method starts in step 501 with an easy-to-use software application responsible for storing, labeling, editing, removing, and/or adding data relating to memories implemented on a mobile device or computer called wallet. In step 502 the creation of a new personal ML model is initiated. In step 503, an ML ID module is selected from a list of ML ID models 411 for input of a raw file (not shown). After selecting the object type, the selected ML ID model provides as output the information "guitar" which is a cognitive block of information. The cognitive block of information is a general public model composed possibly out of multiple images of guitars, with one such image 515 shown in FIG. 5. The cognitive block of information receives a unique signature which in the present example is "CB1". The signature "CB1" is inherited from and created by the ML ID model that was used to extract it from the raw data.

Steps 501 to 504 may be initiated by a user in case the user wishes to input a new raw file for storage and processing in the first database. However, it may also be the case that steps 501 to 504 have been implemented previously and that the user starts with an already present cognitive block of information 14 "CB1". More particularly, in step 504, he may be provided with a list of already available objects and their signatures. Further, it may be provided that steps 501 to 504 were carried out automatically without user interaction to build up an amount of objects waiting to be personalized by adding factual blocks of information. In any case, the further steps starting with step 505 serve to add factual information to a piece of cognitive information chosen by the user.

In step 505, a name for the personal ML model is set, wherein "personal ML model" means that the semantic information output from the chosen ML ID module 411 is supplemented with personal information (which represents an attribute relating to the cognitive block of information). In step 506, a type is defined: "Type: My Old Guitar". In step 507, pictures and/or files are uploaded referring to "my old guitar". For example, a plurality of pictures are added named pic 1 to pic i in FIG. 5. These pictures pic 1 to pic i represent factual information files.

In step 508, one of these pictures is chosen, in the shown embodiment guitar picture 516. Subsequently, in step 509, a fact about the selected guitar may be added by the user. For example, the user may add that the guitar is an old guitar or other information. As the information "old guitar" represents a generic factual attribute of the object "guitar", a signature "FB1" may be automatically applied at this stage to the personal model. Any factual attribute receives its own factual name/signature.

In step 510, an ML model of "my guitar" is created by inputting all added information, in the present example all picture files pic 1 to pic i in an appropriate ML ID module. In step 511, the model inherits the signature of the cognitive block of information CB1. In step 512, the personal model receives its own factual block name and signature. In the present case, the determined factual block of information 15 comprises the signature "CB1 FB1 asaf221 ", wherein the first part "CB1" is the signature of the cognitive block of information 14, and the second part "FB1asaf221" is the signature of the factual block of information (wherein the part "FB1" is a generic signature and the part "asaf221" is the signature that personalizes the factual block of information and makes it unique with respect to the user. Alternatively, only "FB1asaf221" may be chosen as the signature of the factual block of information 15.

The signature "asaf221" is automatically provided by the ML ID module creating the personal model out of the picture file pic 1 to pic i.

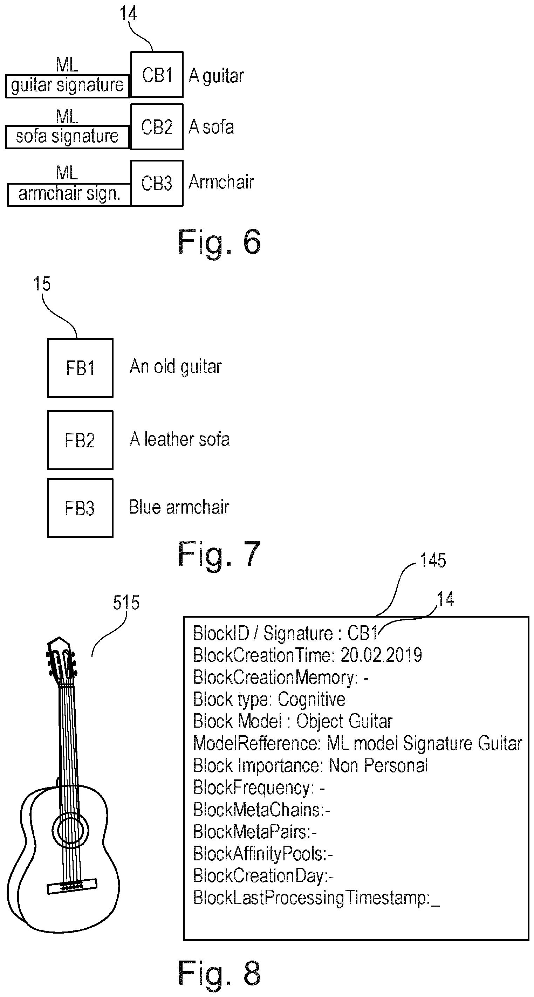

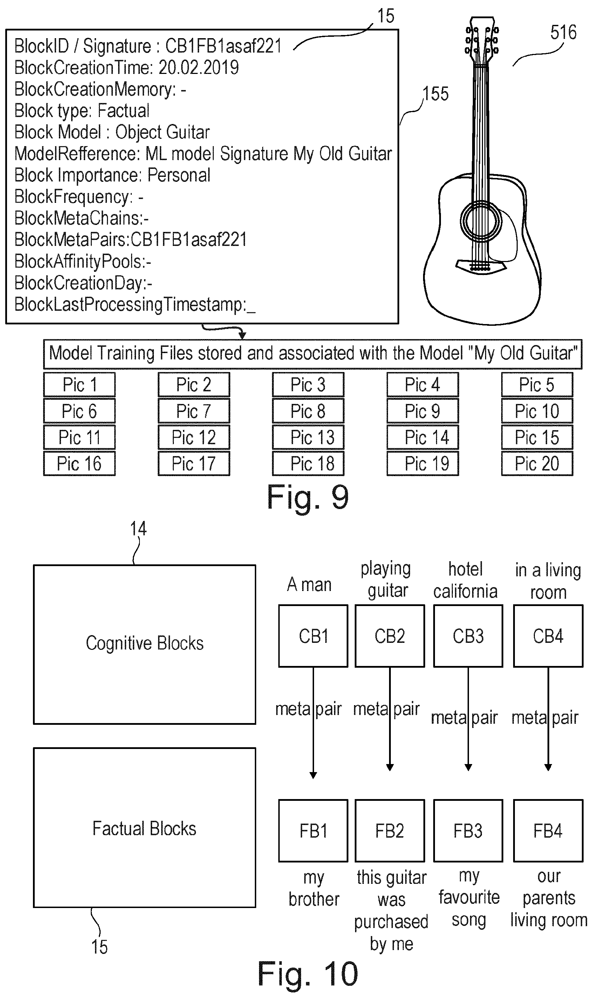

The example of FIG. 5 thus provides for a cognitive block of information 14 and an associated factual block of information 15. Both are stored together with a reference to the factual information files pic 1 to pic i in the first database 5 of FIG. 1, wherein the storing may in one or several entries of the first database 5, such as entries 145 and 155 of FIGs. 8 and 9 as discussed next.

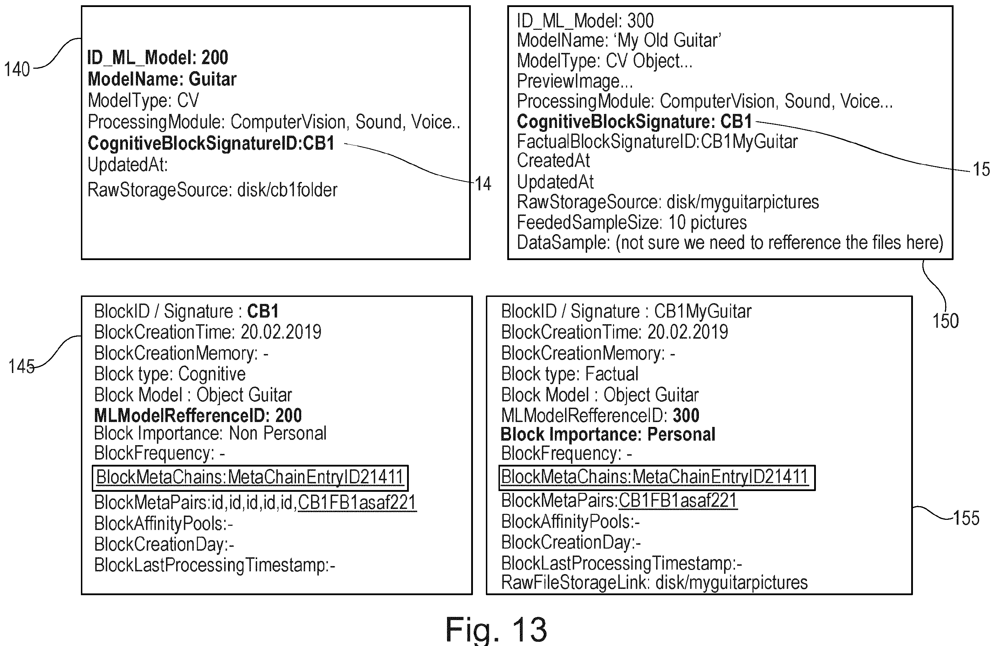

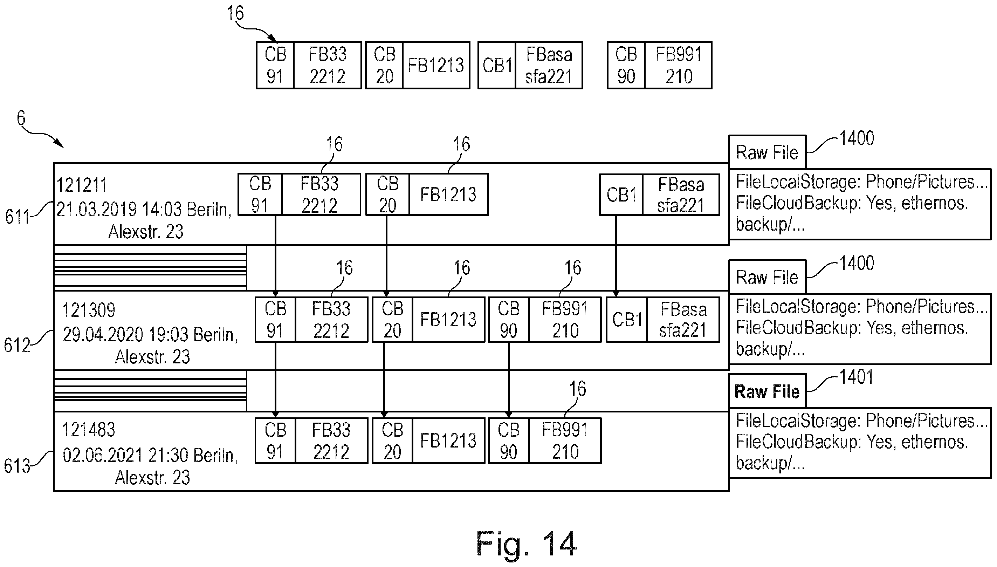

FIGs. 8 and 9 depict the pictures 515, 516 of FIG. 5 and the information stored in database entries 145, 155 of the first database 5 relating to these pictures. The block type ("cognitive" in FIG. 8 and "factual" in FIG. 9) indicates if the block of information 14, 15 is cognitive or factual. The respective signature is shown in the first line. Other information may be also stored, as will be further described with respect to FIGs. 13 and 14.

Fig. 9 also shows the factual information files pic 1 to pic 20 (training files) associated with the personal model, in the given example, "My Old Guitar". These are the factual information files which were used in step 510 in FIG. 5 to provide for an ML model of "My Old Guitar". These factual information files or links to their storage space are also stored in the first database for each group of information that is created in the training phase.

FIGs. 6, 7, 10 and 11 further expand on and illustrate the concept of cognitive blocks of information and factual blocks of information. FIG. 6 shows a plurality of cognitive blocks of information 14 each provided by an ML module. The cognitive blocks of information each receive a specific signature such as "CB1" identifying a guitar. FIG. 7 shows a plurality of factual blocks of information 15 provided through the method described in FIG. 4 and in more detail in FIG. 5. For example, one factual block 14 of information is "An old guitar" having the signature FB1.

FIG. 10 shows how cognitive blocks of information 14 and factual blocks of information 15 are grouped together in so-called meta pairs. In a meta pair, a factual block of information necessarily refers to a specific cognitive block of information.

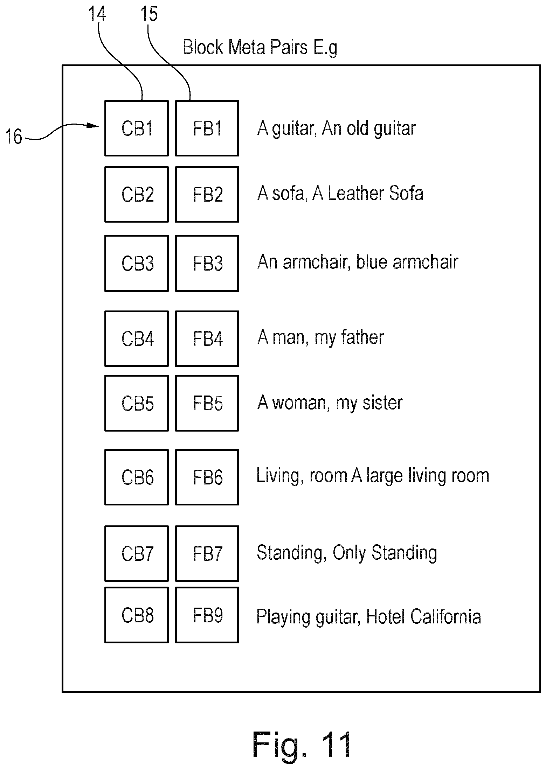

FIG. 11 shows the meta pairs 16. Each meta pair 16 consists of a cognitive block of information 14 and a factual block of information 15 which adds at least one attribute to the cognitive block of information 14. The meta pairs are stored in the second database 6 in FIG. 1. The factual blocks contain more precise information that defines the characteristics of the cognitive extraction and if any the relation with personal ML Models. The factual blocks are always complimentary information of a cognitive block. E.g., guitar, old guitar. CB1FB1 - an old guitar. The factual blocks are extracted on the basis of understanding the cognitive block bonding to them. E.g., a guitar object is detected, and during the factual check characteristics of the guitar are extracted, in the current example "old".

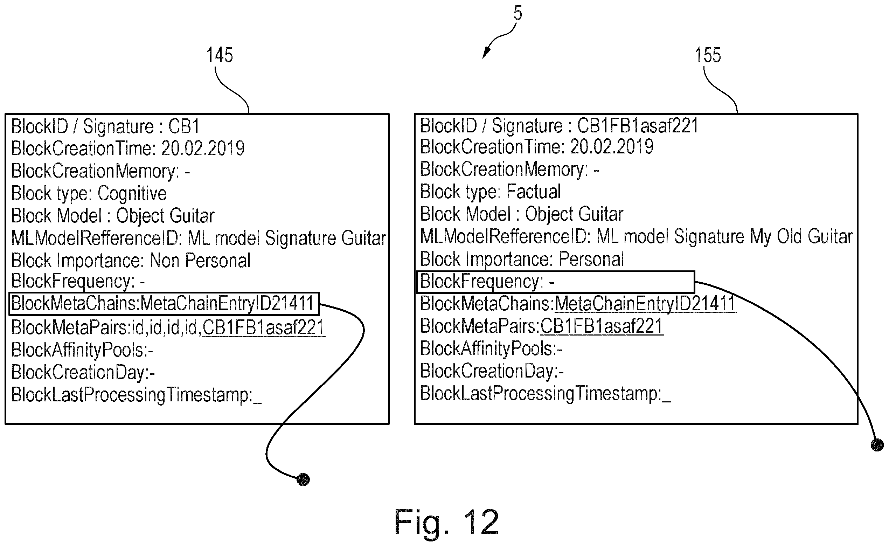

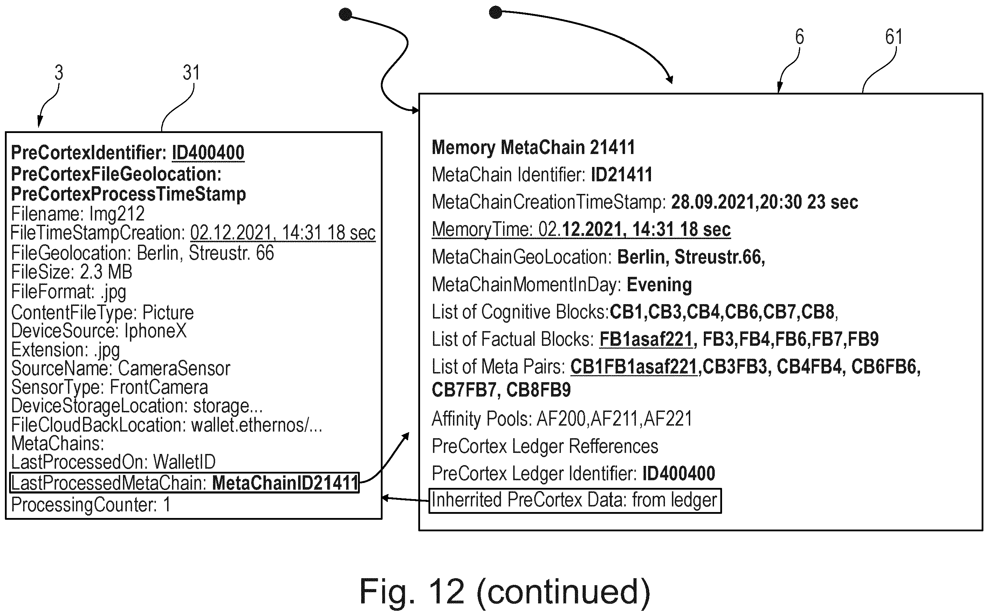

It was already mentioned that the first database 5, the second database 6 and the third database 3 of FIG. 1 may be implemented as ledgers comprising entries. FIG. 12 shows entries of such ledgers. More particularly, FIG. 12 shows entries in the first ledger 5, the second ledger 6 and the third ledger 3. The entries 145, 155 in first ledger 5 are similar to the entries shown in FIGs. 8 and 9. They may be considered parts of an entry of the first database that additionally comprises a reference to factual information files associated with the respective factual block of information. The entry 61 in the second ledger 6 is associated with a particular meta chain, i.e., a group of information comprising at least one meta pair and a reference to a raw file. Entry 61 is also referred to as meta chain entry. The entry of the third ledger 3 is depicted as entry 31. As the third ledger 3 is also referred to as pre-cortex ledger, the entry 31 of the third ledger 3 is also referred to as pre-cortex entry.

As shown, entries 145, 155, 61, 31 of the different ledgers 5, 6, 3 that regard the same raw file reference each other, wherein entries 61 and 31 reference each other and wherein entries 145 and 155 each reference entry 61.

Starting with entry 61, a plurality of information relating to the entry is provided such as a meta chain number (21411) and a corresponding meta chain identifier (1021411). information about timestamp, memory time, geolocation, moment in day are also provided. The entry 61 further identifies cognitive blocks of information, factual blocks of information and a list of meta pairs formed by these cognitive blocks of information and factual blocks of information in the manner discussed. Further, an affinity pool is identified, which will be discussed with respect to FIG. 18.

The entries 61 further comprise a reference to a "pre-cortex ledger identifier" which is an identifier of the third ledger 3, wherein the third ledger 3 is also referred to as "pre-cortex ledger" in the terminology used. The ID number specified (ID400400) is the pre-cortex identifier in entry 31.

The third ledger pre-cortex entry 31 comprises a plurality of information as shown in FIG. 12. Among this information is information of where the raw file which was used to create the cognitive block of information is stored. In this respect, a plurality of information about the stored file is included and a specific storage space is identified under "FileCloudBackLocation".

Accordingly, by the meta chain entry 61 referring to the third ledger 3 and its pre-cortex entry 31, the meta chain entry 61 comprises a reference to the raw file used to extract the cognitive block of information.

Further, as entry 61 includes a list of cognitive blocks and a list of factual blocks, it is always possible, starting with the information in entry 61, to regain and identify the information in the entries 145, 155 of the first database. For example, the "List of Cognitive Blocks" in entry 61 includes block "CB1". As the Block ID / Signature of entry 145 is "CB1", it is possible to identify all the information which is stored directly or indirectly in entry 145 starting from entry 61. In a similar manner, as the "List of Meta Pairs" in entry 61 includes meta pair "CP1FB1asaf221", and as the Block ID / Signature of entry 155 is "CB1FB1asaf221", it is possible to identify all the information which is stored directly or indirectly in entry 155 starting from entry 61. An entry 61 thus comprises or includes links to all the relevant information with respect to a raw file and its respective meta pair.

It is pointed out that the meta chain entry 61 may (and does in the shown embodiment) comprise a multitude of cognitive blocks of information (CB1, CB3, CB4, CB6, CB7, CB8) and factual blocks of information (FB1asaf221, CB3FB3, CB4FB4, CB6FB6, CB7FB7, CBKFB8) and corresponding meta pairs (wherein for each of those respective entries 145, 155 exist) that refer to the same specific file that was processed and based of which a plurality of meta pairs have been extracted. Therefore, the reference in entry 61 is to one pre-cortex entry 31 only, namely, the pre-cortex entry 31 which includes or references this specific file.

Generally, the entries 145, 155 with the cognitive block of information 14 and the factual block of information 15 are organized similar to FIGs. 8 and 9.

FIG. 13 shows further details about the organization of the first database. The bottom of FIG. 13 shows an entry 145 with a cognitive block of information 14 and an entry 155 with a factual block of information 15 in the manner described before. The entry 145 comprises in its table an entry called "MLModelRefferencelD" which is set to "200". "MLModelRefferencelD" is a so-called public models table 140 which identifies the ML ID module used to create the cognitive block of information from a raw file and also the storage source of the raw file.

This information is included in public models table 140 which identifies the processing module and the raw storage source.

In a similar manner, the entry 155 comprises in its table a block "MLModelRefferencelD" which is set to "300". "MLModelRefferencelD" is a so-called private models table 150 which identifies the ML ID module used to create the factual block of information based on the factual information files associated with that factual block of information. This information is included in private models table 150 which identifies the processing module, the storage source for the factual information files ("RawStorageSource") and as personal textual information the model name "My old guitar".

The example of FIG. 13 shows that the first database 5 may be organized in layers and that the entries 145, 155 in the database may refer to other tables (stored in the same or another database) for relevant information such as the personal information and the storage space of the raw file and the factual information files, respectively.

FIG. 14 is an example for the organization of the second ledger 6 comprising a plurality of meta chain entries 611-613 similar to meta chain entry 61 of FIG. 1 but depicted in a different layout. Each meta chain entry comprises several meta pairs 16. The ordering principle of the blog entries is time.

FIG. 14 indicates that different meta chain entries 611-613 may coincide in that they contain matching cognitive and factual blocks and, accordingly, the same meta pair 16 or several same meta pairs 16. In the example of FIG. 14, the following meanings of the meta pairs 16 is assumed to give an example:
CB91FB332212: Location, User home in Berlin
CB20FB1213: A man, User Father
CB1: Fbasasfa221: Playing instrument, my old guitar
CB90FB991210: Drinking, red wine

Accordingly, the accumulated content is user location, user father, playing guitar on my old guitar, and drinking red wine.

It may be that in the course of time the reference to a raw file becomes deleted or damaged. For example, it is assumed that the meta chain entries 611-613 contain some of the above meta pairs. But the meta chain entry 613 does not have the raw file 1401 anymore. Meta chain entry 613 only holds the processed information that is translated as on 02.06.2021 at 21:30 in the user's home from Berlin, A man, the user's father, was drinking red wine (without the meta pair for playing an instrument - my old guitar). In order to reconstruct the memory of the father is at the user's home and drinking wine the meta chain entry 613 can be directly related with meta chain entry 612, where there is a raw file of my father performing this action.

This relation is identified by overlapping blocks CB91FB332212 - User home in Berlin, CB20FB1213 - user father and CB90FB991210 - drinking red wine. A visual memory of the father drinking red wine can be surfaced from the raw file 1400 of entry 612.

The same logic can be extrapolated to any source where cognitive blocks are commonly shared between different meta chains entries and it is similar to the way the human brain simplifies long-term memory details.

Accordingly, if a reference to a raw file in an entry has been deleted or damaged for some reason, it is possible to search the second database 6, namely, the other meta chain entries 611, 612 etc. for meta pairs which are identical. If such meta pairs are found, the reference to the raw file associated with that meta chain entry may be used as new reference because this other raw file is also suitable to extract the meta pairs in question. For example, the reference 1400 to a raw file in block entry 612 may be used to replace the reference 1401.

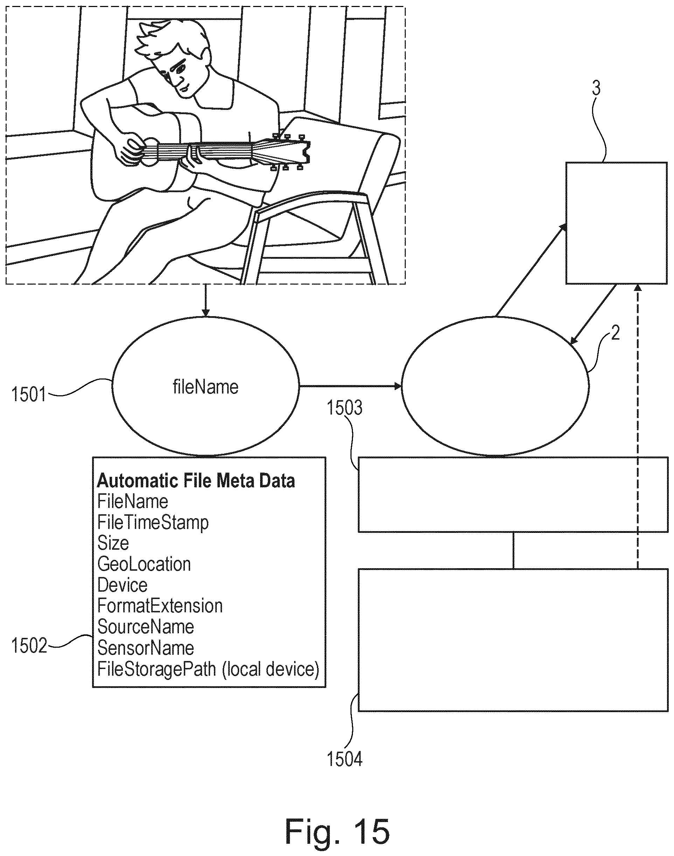

FIG. 15 is an example of the processing in pre-cortex module 2 of FIG. 1 which so far has only been briefly discussed. The purpose of the pre-cortex module 2 is to pre-check by inquiring the third database 3 as to whether a received digital raw file had been received previously. Pre-cortex module 2, prior to processing a digital raw files, implements a check if the digital raw file has already been processed. To this end, the digital new raw file is compared with previously input digital raw files stored in the third database. If an identical raw file is found, the new raw file is associated with the meta pair of information previously provided by the processing of the identical raw file. If an identical raw file is not found, the digital raw file is further processed and input into the main processing module 4 of Fig. 1.

More particularly, referring to FIG. 15, a new raw file received from input module 1 of FIG. 1 receives a filename 1501 and metadata 1502 associated with the file. The pre-cortex module 2 searches the third database 3, which is another ledger as previously discussed, for the raw file. To determine if the same raw file is already included in the third ledger 3, in step 1503, the date, time stamp, geolocation, file size and filename are used for filtering. A one-to-one comparison between the new file and the file info from the third ledger is made to determine if the files are different all the same.

If no match is found, in step 1504 a unique identifier for the file is generated. The entry time and date, the file identifier, filename and file metadata are logged in a new entry (such as entry 31 of FIG. 12) in the third ledger 3. In addition, storage data information is stored in the third ledger 3. The file is then passed to the main processing module 4 together with its file size, metadata and an identifier for the third ledger 3.

If a match is found, the timestamp of the processing and the geolocation of the staking device are added in the third ledger to the duplicate of the respective entry that already existed.

Fig. 16 shows an embodiment of the main processing module 4 of the system 10 of FIG. 1. The main processing module 4 comprises a first functionality block 41 and a second functionality block 42, which are shown in greater detail in FIG. 17. The following description refers both to FIG. 16 and FIG. 17. In the first functionality block 41, the raw file is input into at least one ML module 411 to create cognitive blocks of information. The ML modules 411 include, but are not limited to a face and people detection ML module, a space recognition ML module, a voice recognition ML model, an activity extraction ML module, and a file metadata output ML module. These ML modules are state of the art ML modules which have been trained in accordance with the state of the art. The ML modules provide as output cognitive blocks of information 14. The first functionality block 41 provides for a cognitive extraction 1701.

A considered raw file may be input into a plurality of ML modules. For example, if the raw file is a picture/image, it may be submitted to a face detection ML module to identify if humans are present, it may be further submitted to a face recognition ML module to identify who the humans are by comparing against personal ML models in the first database, it may be further provided to a space identification ML module to identify spatial information, it may be further provided to an object detection and identification ML module to identify objects that are in the image, and it may be further provided to a motions extractor ML module to identify emotions of the humans. All these modules each output at least one cognitive block of information.

In another example, an audio sound file is input into a voice recognition ML model to identify a person from the voice or male, female and kid characteristics. The audio sound file may be further input to a voice semantics ML module 2 identified key meanings from the voice. In such case, a plurality of cognitive blocks of information may be provided by one ML module. The audio sound file may be further input into a sound recognition ML module.

In another example, if the input file is text, text semantics may be determined by a ML module.

In another example, if the input file is a video file, the video file may be input in ML modules for phase detection, face recognition, activity recognition, space identification, object detection and identification, a motions extractor, voice recognition, voice semantics and sound recognition.

FIG. 17A is an example of the cognitive extraction phase provided in the first functionality block 41. In step 171, a considered raw file is input into a chosen ML ID module and the ML ID module uses the identification functionality (ID) of the artificial intelligence to extract elements from the photo/picture. In the given example, a plurality of elements are extracted by the ML ID module and the extracted output is shown in block 172 together with a percentage likelihood of a correct identification. For example, a guitar is identified with 90 percent likelihood, a man is identified with 99 percent likelihood, etc. In block 173, if the likelihood of correct detection is above a predefined level, cognitive blocks are defined based on the extracted output. For example, the guitar is identified as cognitive block CB1. A man is identified as cognitive block CB4, etc. The output of the cognitive extraction is shown in block 174 and comprises a plurality of cognitive blocks of information CB1, CB4, CB3, CB33, CB41 and CB84. In another example, there may be just one cognitive block of information as output of the cognitive extraction phase for a considered raw file.

In the subsequent factual extraction 1702 provided by the second functionality block 42, a plurality of personal ML CP models 421 are used to provide for factual blocks of information 15. The personal ML CP models 421 may include an object factual engine, a personal recognition engine, a space factual engine, an activity factual information, time and date, and geolocation. These engines 421 interact with the first database 5 as previously discussed and as schematically shown in FIG. 16. In the embodiment of FIG. 16, in addition an optional caching layer 1601 is provided interfacing between the modules 421 and the first database 5. The caching layer 1601 may hold key groups of information of high importance to the user such as people around, location, activities, objects and personal information with higher usage access. The caching layer 1601 thus comprises for quick access some of the information included in the first database 5.

FIG. 17B is an example of the factual extraction phase provided in the second functionality block 42. Referring to FIG. 17A, block 174 identifies the cognitive blocks of information which represent the output of the cognitive extraction phase. Block 174 further shows an image Img51.jpg which represents the raw file that is processed during cognitive and factual extraction.

In step 175 of FIG. 17B, it is looked in database 5 for factual blocks which have a one to one match with the above block signatures. For example, in step 176, it is looked for factual blocks in the first database 5 where CB1 is a cognitive block in the groups of information stored in the first database.

It is assumed that in step 177 a reference to a factual block of information is found in the first database: FB1asaf221- My Old guitar, wherein the meta pair is CB1FB1asaf221. In step 178, an ML CP module 421 (see FIG. 16) must identify if the meta pair CB1FB1asaf221 - My Old Guitar represents the same guitar as the raw file Img51.jpg that is being processed or if the raw file Img51.jpg that is being processed includes an unknown guitar. To this end, in step 179 the ML CP module uses its comparison functionality (CP) to determine the similarity between Img51.jpg and the personal model of "my old guitar". As shown schematically in step 180, this is done by comparing through the ML CP module the raw file Img51.jpg with all factual information files pic 1 to pic 20 that are associated with the factual block of information FB1asaf221. In this respect, reference is made to FIG. 9 depicting the information stored in an entry of the first database 5 with respect to a factual block of information which includes the factual information files or references to the factual information file. The comparison can be done sequentially.

In step 181, if the comparison with all factual information file yields a semantical identity with respect to the guitar in raw file Img51.jpg, which is the case when a configurable threshold is reached, the ML CP module provides as output a confirmation of semantical identity.

Accordingly, in step 182, as meta pair for raw file Img51.jpg is identified CB1FB1asaf221, this meaning that the guitar of raw file Img51.jpg represents the same guitar as the one input in first database 5 in the training phase of the first database 5. As discussed before, as factual block of information of the meta pair is simply taken the factual block of information stored in the first database 5 in the group of information that contains the cognitive block of information CB1.

The same procedure is implemented with the other cognitive blocks CB4, etc. provided in block 174 as output of the cognitive extraction phase.

Referring again to FIG. 16, the first and second blocks of information form meta pairs 1602 similar to the meta pairs of FIG. 11. The cognitive extraction 1701 and the factual extraction 1702 for a considered raw file are stored in a meta chain entry 61 of the second database 6. The meta chain entry 61 may contain the information shown in entry 61 of FIG. 12.

Fig. 18 describes a process implemented to improve the second database/ledger 6 of FIG. 1, namely, to create affinity pools of corresponding meta pairs of related information. This allows to relate and retrieve a plurality of meta pairs which together form a or participate in a memory of a user. To this end, meta pairs of information in a meta chain entry in the second ledger 6 are compared in step 1801 of FIG. 18 with meta pairs in other meta chain entries of the second ledger having the same first cognitive block of information or the same first factual block of information. Information about meta pairs in corresponding meta chain entries is stored in step 1802. The information about the affinity pools is stored in the meta chain entry 61 of ledger 6 (which is the same entry as entry 61 of FIG. 12), see entry "Affinity Pools".

The affinity pools information is updated each time a new entry is entered into the second ledger 6. All old meta chains will be grouped as being in the same affinity pool with the newly added meta chain based on the shared meta pairs.

Fig. 19 describes a further process implemented to improve the second database 6 of FIG. 1, namely, to update past entries in the second database 6 by replacing in previously stored meta pairs factual blocks of information which previously comprised unknown factual information with newly found factual information from the first database. A factual block of information may comprise unknown factual information in case that during the search in the first database 5 no group of information had been identified that comprises the first cognitive block of information. A reason for the update may be that the user has updated the first database by adding a further group of information to the first database 5.

The update is implemented such that, each time a new meta chain entry is logged into the second database 6, the second database 6 is updated by searching for all meta pairs of all meta chain entries of the second database which have the same first cognitive block of information and which have a factual block of information that is unknown factual information. It is compared for each matching meta pair with the same cognitive block of information the factual block of information of that matching meta pair with the factual block of information of the new meta pair. This comparison comprises a comparison of the respective raw files as to their semantics using an ML ID module. If the respective raw files are semantically identical, the factual block of information of the matching meta pair is replaced by the factual block of information of the new meta pair.

This process of updating past entries in view of new information stored in the first database 5 is also referred to as an "anti-proof of history process". During such process all the meta pairs with unknown factual blocks have their raw files semantically compared against all the previously logged meta pairs where there is a cognitive block overlap. For example, given that there are three meta pairs containing information about a guitar, always a new meta pair containing guitar information is compared against the three of them to see if not by chance the raw file of any of these three meta pairs references to the same guitar as contained in the newly processed file, for which case this meta pair is exchanged by the new meta pair of the newly processed file.

This is illustrated in FIG. 19. In step 1901, an unknown block, e.g., a blue armchair CB3FB3 was identified - based on the signature of the CB3 armchair and the factual information "blue" - as similar with a more precise factual information CB3FB3hjjs (e.g., "my blue armchair"). Subsequently, in step 1902, in the second database (the "meta chain ledger") CB3FB3 is replaced with CB3FB3hjjs in all meta pairs which comprise CB3FB3. The second database 6 the first database (block ledger) 5 are updated accordingly in steps 1903 and 1904. A new affinity pool is created and the affinity pool list is updated in steps 1905 and 1906.

In an alternative embodiment, the unknown block does not comprise any meaningful information, i.e., the meta pair comprises CB3 (the cognitive block of information) only. An improvement in that case is already the information "blue" (FB3) and the factual blocks of information are updated accordingly if an identical file is located and that factual information retrieved.

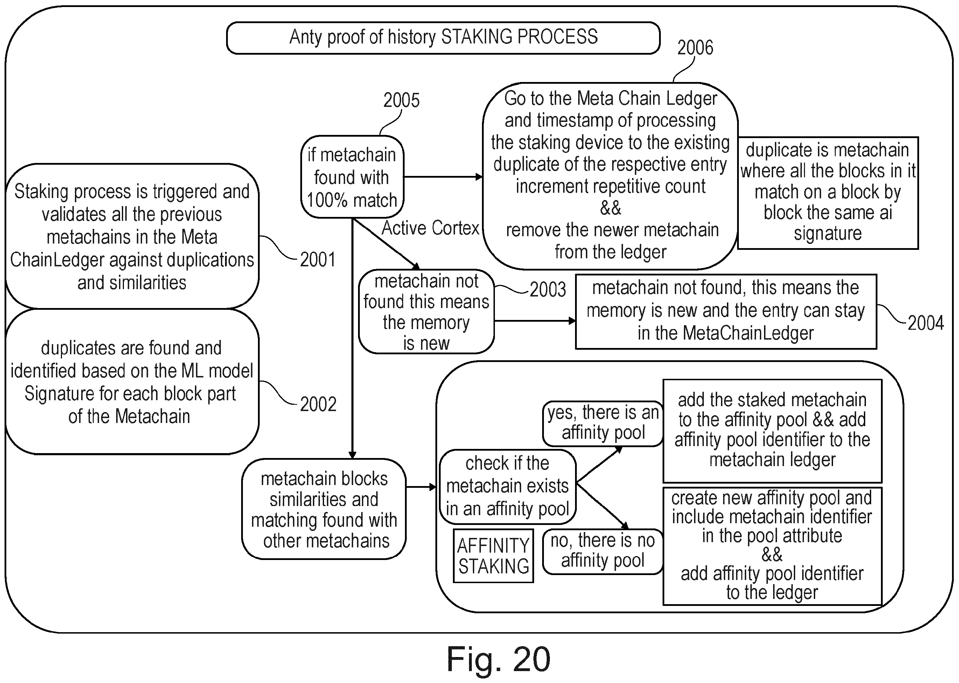

Fig. 20 describes a further process implemented to improve the second database 6 of FIG. 1, in this case to avoid duplicates in the second database and make sure that for the same raw file one meta pair is used only. To this end, each time a new meta chain entry is logged into the second database, the second database is updated by searching for all meta pairs of all meta chain entries of the second database which have the same first cognitive block of information, and by comparing, for each matching meta pair with the same cognitive block of information, the semantics of the respective raw files. The comparison is made through an ML CP module, wherein the semantics of the respective raw files are compared. If the semantics of the respective raw files is identical, the factual block of information of the matching meta pair replaces the factual block of information of the new meta pair (such that the matching meta pair replaces the new meta pair as the cognitive block of information is also the same).

The process is carried out for all unknown meta pairs logged in the last meta chain entry until all meta pair are compared against the past unknown once's.

To give an example, there is CB1X - my old guitar, and CB1W - an unknown guitar, and during the factual extraction of a memory CB1M is identified as another block containing a guitar. The system will compare CB1M first to see if is not the same as CB1X. If is not the same as CB1X, the system will accept CB1M is an unknown factual information about a guitar, but will continue processing and compare it against CB1W by a file vs file semantical comparison of W and M. If the ML CP module determines that there is actually a match between those, in all the meta pairs CB1M will be replaced by CB1W. This way, duplicates are avoided with respect to the file semantics, wherein the first appearance of a specific file and of the corresponding meta pair replaces later entries of the same meta pair (wherein the later entry may include a reference to the earlier entry). The described method for the avoidance of duplicates determines the semantics of the respective files, which are be different but contain the same information. On the other hand, the processing in pre-cortex module 2 discussed with respect to FIG. 15 serves to avoid that identical files are processed to form different meta chain entries.

In FIG. 20, in step 2001 a staking process is triggered and all previous meta chains entries in the second database/meta chain ledger 6 are validated against duplications and similarities. According to step 2002, duplicates, if any, are found and identified based on the ML model signature for each block of the meta chain entry. More particularly, a check is made if a new meta pair (or a new meta chain comprising the new meta pair) in a new entry is already included in older entries of the second database. If not, the new entry can stay in the meta chain ledger 6, see 2003 and 2004. If a new meta pair is already included in the second database 6, the new duplicate is deleted and replaced by a timestamp and a reference to the old meta pair, as shown in steps 2005 and 2006.

Accordingly, historical duplicates are verified and the new factual blocks without a historical match or ML signature are compared against other entries present in the older meta pair entries. If matches are found the new blocks are replaced by the older blocks and the meta pairs where the match was found are indexed in a new affinity pool. The blocks without a match remain unindexed and maintain their position in the meta pair entry.

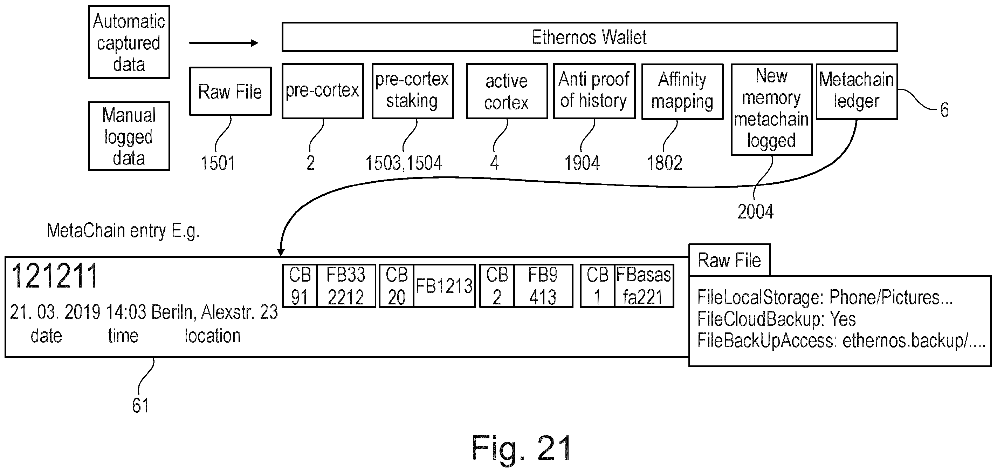

Fig. 21 is a high level flow of a raw file to a second database meta pair entry, implementing all the steps as previously discussed with respect to the previous figures.

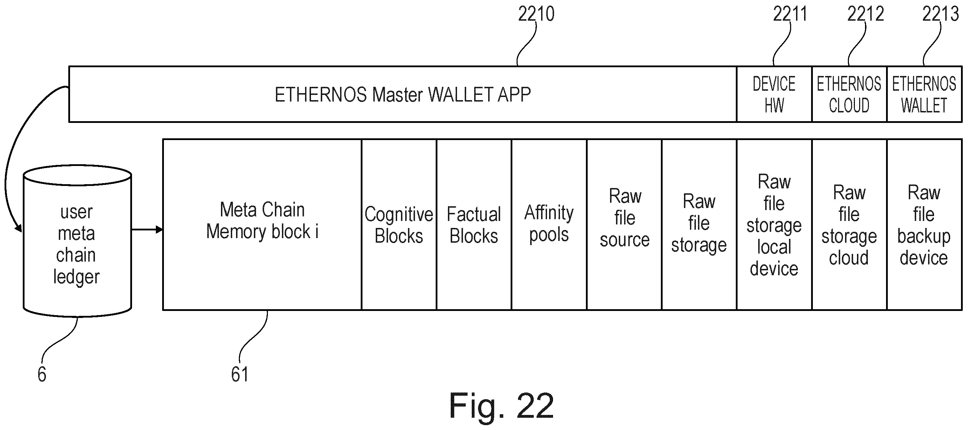

Fig. 22 schematically shows the process of retrieving stored data using an application 2210 running on a user device hardware 2211, in the cloud 2212 or in a secondary wallet 2213. The application queries the second database 6 and the meta pair entries included therein. The query identifies at least one of a point or period in time, a first cognitive block of information, a first factual block of information and a meta pair of information. The different entries of the second database/ledger 6 are searched in this respect. Using the application 2210, the user is able to navigate through the second database 6 to locate first cognitive blocks of information, first factual blocks of information and meta pairs. In case of a match, the stored information unfolds and may be fully retrieved including the original raw files and factual information files by means of the information and references in the different blocks of the different ledgers 5, 6 and 3.

Fig. 23 illustrates a variant which regard the situation that different memories/respective raw files are stored in different locations such as a mobile device 2310, a cloud 2311 and a desktop 2312. A synchronization is provided in each device/location 2310, 2311 and 2312 has a full copy of the second database 6.

Both the second database and the raw files associated with cognitive blocks of information may be stored on a device running an application (called the Ethernos Wallet). Users with multiple devices running an Ethernos wallet have all their raw files stored on the specific devices running the wallet application. The second database is be shared across all the devices. One of the devices running the Wallet can be set as Master Wallet and an active backup of all the files from the other devices can be enabled. An active backup ensures that all the files connected to a raw memory from any of the wallets are backed up in the master wallet.

In case of a cloud backup, the user master wallet is backed up in a cloud decentralized container dedicated to each specific user.

Fig. 24 illustrates that the concept of the present invention may be expanded to a plurality of users each having their own second database 6-1, 6-2, 6-3. The relation between multiple user memories can be recreated on a higher network level by colliding and mapping multiple user databases based on location, timestamp, device, and device connectivity area. Multiple users memories in the same date, time, or location can easily be reconstructed by merging the meta chains of these users and validating where the overlapping moments are and what was backed up for each of the users. The source of alignment is always time as it handles the proof of history of the events and mapped memories and indicates the present moment of the verification.

A user can establish certain privacy and anonymity measures and ultimately can choose to be discovered or share his memories or collections of memories with other users.

The described method and system serve to organize at best storage costs the relation between facts/events defining human memories and to maintain a high level of detailed reconstructable facts without direct access to all the raw files that were associated with a processed memory. By parsing the second ledger same cognitive and factual blocks can be identified and user memories can be reconstructed.

Also, those skilled in the art will appreciate that other aspects of the disclosure can be obtained from a study of the drawings, the disclosure, and the appended claims. All methods described herein can be performed in any suitable order unless otherwise indicated herein.

## Claims

1. A computer-implemented method of collecting, organizing and storing data relating to the memories of a user, the method comprising:
- automatically collecting (201) data relating to events or facts that may form memories of the user using sensor sources and/or digital sources,
- separating (202) the collected data into a plurality of the digital raw files, and time stamping the digital raw files,
- processing at least some of the digital raw files, wherein for each processed raw file the processing comprises:
- inputting (203) the raw file into at least one machine learning identification module, ML ID module, wherein the at least one ML ID module comprises at least one of an object detection ML ID module, a face and people detection ML ID module, and a voice recognition ML ID model, and receiving as semantic output of the ML ID module a first cognitive block of information identifying content in the raw file,
- providing (204) a first factual block of information that comprises at least one attribute relating to the first cognitive block of information, the first factual block of information being automatically provided by
∘ searching (301) a first database (5) stored in a computer device and/or computer system for previously stored groups of information, each previously stored group of information comprising a cognitive block of information and a factual block of information that comprises at least one attribute relating to the cognitive block of information, wherein the factual block of information is associated with at least one factual information file,
∘ wherein if during the search a group of information is found that comprises a cognitive block of information that is identical to the first cognitive block of information output from the ML ID module,
▪ a determination is made if the raw file is semantically identical to at least one of the at least one factual information files associated with the factual block of information of that group of information, and
▪ if so, as first factual block of information is defined (302) the factual block of information of that group of information,
▪ if not, the first factual block of information is defined as unknown factual information,
∘ wherein if during the search no group of information is found that comprises a cognitive block of information that is identical to the first cognitive block of information output from the ML module, the first factual block of information is also defined (303) as unknown factual information,
- pairing (205) the first cognitive block of information and the first factual block of information into a meta pair of information,
- logging (206) the meta pair of information and a reference to the respective processed raw file in a second database (6) stored in a computer device and/or computer system,
- wherein prior to processing a digital raw file a check is made if the digital raw file has already been processed, the check comprising
∘ compare the digital new raw file with previously input digital raw files stored in a third database (3) of a computer device and/or computer system,
∘ wherein, if an identical raw file is found, the new raw file is associated with the meta pair of information previously provided by the processing of the identical raw file,
∘ wherein, if an identical raw file is not found, the digital raw file is further processed, wherein a new entry is created in the third database (3) for the raw file,
- wherein in case the first factual block of information of a new meta pair comprises factual information contained in the first database, each time a new meta pair is logged into the second database (6) the second database (6) is updated by
∘ searching for all meta pairs of the second database (6) which have the same first cognitive block of information,
∘ for each matching meta pair with the same cognitive block of information and with a factual block of information that is unknown factual information, compare the factual block of information of that matching meta pair with the factual block of information of the new meta pair, the comparison comprising comparing the respective raw files, wherein if the respective raw files are semantically identical the factual block of information of the matching meta pair is replaced by the factual block of information of the new meta pair, and wherein
- the first database (5) is organized as a first ledger having a plurality of entries (14, 15), wherein each entry of the first ledger comprises at least a first cognitive block of information, a first factual block of information, and a reference to at least one factual information file,
- the second database (6) is organized as a second ledger having a plurality of entries (61), wherein each meta pair of information and the reference to the respective raw file used to extract the cognitive block of information is written into an entry of the second ledger, and
- the third database (3) is organized a third ledger having a plurality of entries (31), wherein each entry of the third ledger comprises at least a digital raw file or a reference to the storage space of the digital raw file and a time stamp of the digital raw file.

2. The method of claim 1, **characterized in that** the first database (5) of previously stored groups of information is built in a training phase, wherein each group of information is provided by:
- choosing (401), by a user, a cognitive block of information previously provided by one of the ML ID modules based on a raw file of previously collected data,
- adding (402), by a user, information about the chosen cognitive block of information, wherein this information is provided in at least one factual information file,
- inputting (403) the at least one factual information file into at least one ML ID module and receiving as semantic output of the ML ID module a factual block of information,
- storing (404) the factual block of information together with the cognitive block of information,
- further storing (405) in the group of information at least a reference to the at least one factual information file.

3. The method of claim 1 or 2, **characterized in that**
- making the determination if the raw file is semantically identical to at least one of the at least one factual information files includes semantically comparing, using at least one machine learning comparison module, ML CP module, the raw file with at least one of the factual information files,
- wherein both the raw file and the at least one factual information file are input into the ML CP module for comparison, and
- wherein a semantical identity is found if a configurable threshold is reached by the comparison result output from the ML CP module.

4. The method of any of the preceding claims, **characterized in that**
- each cognitive block of information of a meta pair comprises a first signature,
- each factual block of information of a meta pair comprises a second signature,
- wherein each meta pair is identified by a meta pair signature comprising the first signature and the second signature.

5. The method of any of the preceding claims, **characterized in that** each time a new meta pair is logged into the second database (6) the second database (6) is updated by
- searching for all meta pairs of the second database (6) which have the same first cognitive block of information,
- for each matching meta pair with the same cognitive block of information, compare the respective raw files by an ML CP module as to their semantics, wherein if the semantics of the respective raw files are identical the factual block of information of the matching meta pair replaces the factual block of information of the new meta pair, thereby referring a new first factual block of information to a previously stored first factual block of information.

6. The method of any of the preceding claims, **characterized in that** the method further comprises:
- comparing meta pairs of information in the second database (6) with meta pairs having the same first cognitive block of information or the same first factual block of information,
- wherein information about meta pairs with corresponding blocks of information is stored together with the meta pairs.

7. The method of any of the preceding claims, **characterized in that**
- the cognitive block of information is included in an entry (145) of the first ledger (5) that comprises a table that refers to a public models table (140), the public models table identifying a ML ID module and a storage source, and
- the factual block of information is included in an entry (155) of the first ledger (5) that comprises a table that refers to a private models table (150), the private models table identifying a ML CP module, a storage source of the at least one factual information file and personal information.

8. The method of any of the preceding claims, **characterized in that** the entries (61) of the second ledger (6) each additionally comprise a reference to the entry (31) of the third ledger (3) in which the digital raw file or a reference to the storage space of the digital raw file is stored.

9. The method of any of the preceding claims, **characterized in that** the method further comprises providing, upon a query of the user, information stored or referenced in the second database (6), wherein the query comprises identifying a least one of a point or period in time, a first cognitive block of information, a first factual block of information and a meta pair of information.

10. A data processing system (10) of collecting, organizing and storing data relating to the memories of a user, the system comprising:
- one or more processors;
- a storage device operatively coupled to the one or more processors and having program instructions stored therein, which when executed by the one or more processors configure the one or more processors to:
- automatically collect (201) data relating to events or facts that may form memories of the user using sensor sources and/or digital sources,
- separate (202) the collected data into a plurality of the digital raw files, and time stamping the digital raw files,
- process at least some of the digital raw files, wherein for each processed raw file the processing comprises:
- input (203) the raw file into at least one machine learning identification module, ML ID module, wherein the at least one ML ID module comprises at least one of an object detection ML ID module, a face and people detection ML ID module, and a voice recognition ML ID model, and receive as semantic output of the ML ID module a first cognitive block of information identifying content in the raw file,
- provide (204) a first factual block of information that comprises at least one attribute relating to the first cognitive block of information, the first factual block of information being automatically provided by
∘ searching (301) a first database (5) stored in a computer device and/or computer system for previously stored groups of information, each previously stored group of information comprising a cognitive block of information and a factual block of information that comprises at least one attribute relating to the cognitive block of information, wherein the factual block of information is associated with at least one factual information file,
∘ wherein if during the search a group of information is found that comprises a cognitive block of information that is identical to the first cognitive block of information output from the ML ID module,
▪ a determination is made if the raw file is semantically identical to at least one of the at least one factual information files associated with the factual block of information of that group of information, and
▪ if so, as first factual block of information is defined (302) the factual block of information of that group of information,
▪ if not, the first factual block of information is defined as unknown factual information,
∘ wherein if during the search no group of information is found that comprises a cognitive block of information that is identical to the first cognitive block of information output from the ML module, the first factual block of information is also defined (303) as unknown factual information,
- pair (205) the first cognitive block of information and the first factual block of information into a meta pair of information,
- log (206) the meta pair of information and a reference to the respective processed raw file in a second database (6) stored in a computer device and/or computer system, wherein
- prior to process a digital raw file a check is made if the digital raw file has already been processed, the check comprising
∘ compare the digital new raw file with previously input digital raw files stored in a third database (3) of a computer device and/or computer system,
∘ wherein, if an identical raw file is found, the new raw file is associated with the meta pair of information previously provided by the processing of the identical raw file;
∘ wherein, if an identical raw file is not found, the digital raw file is further processed, wherein a new entry is created in the third database (3) for the raw file,
- wherein in case the first factual block of information of a new meta pair comprises factual information contained in the first database, each time a new meta pair is logged into the second database (6) the second database (6) is updated by
∘ searching for all meta pairs of the second database (6) which have the same first cognitive block of information,
∘ for each matching meta pair with the same cognitive block of information and with a factual block of information that is unknown factual information, compare the factual block of information of that matching meta pair with the factual block of information of the new meta pair, the comparison comprising comparing the respective raw files, wherein if the respective raw files are semantically identical the factual block of information of the matching meta pair is replaced by the factual block of information of the new meta pair, and wherein
- the first database (5) is organized as a first ledger having a plurality of entries (14, 15), wherein each entry of the first ledger comprises at least a first cognitive block of information, a first factual block of information, and a reference to at least one factual information file,
- the second database (6) is organized as a second ledger having a plurality of entries (61), wherein each meta pair of information and the reference to the respective raw file used to extract the cognitive block of information is written into an entry of the second ledger, and
- the third database (3) is organized a third ledger having a plurality of entries (31), wherein each entry of the third ledger comprises at least a digital raw file or a reference to the storage space of the digital raw file and a time stamp of the digital raw file.

## Patentansprüche

1. Computerimplementiertes Verfahren zum Sammeln, Organisieren und Speichern von Daten, die sich auf die Erinnerungen eines Benutzers beziehen, wobei das Verfahren umfasst:
- automatisches Sammeln (201) von Daten, die sich auf Ereignisse oder Fakten beziehen, die Erinnerungen des Benutzers bilden können, unter Verwendung von Sensorquellen und/oder digitalen Quellen,
- Trennen (202) der gesammelten Daten in eine Mehrzahl von digitalen Rohdateien und Zeitstempeln der digitalen Rohdateien,
- Verarbeiten zumindest einiger der digitalen Rohdateien, wobei das Verarbeiten für jede verarbeitete Rohdatei Folgendes umfasst:
- Eingeben (203) der Rohdatei in zumindest ein maschinelles Lernidentifikationsmodul, ML ID-Modul, wobei das zumindest eine ML ID-Modul zumindest eines von einem ML ID-Modul zur Objekterkennung, einem ML ID-Modul zur Gesichts- und Personenerkennung und einem ML ID-Modell zur Spracherkennung umfasst, und Empfangen eines ersten kognitiven Informationsblocks, der den Inhalt in der Rohdatei identifiziert, als semantische Ausgabe des ML ID-Moduls,
- Bereitstellen (204) eines ersten faktischen Informationsblocks, der zumindest ein Attribut umfasst, das sich auf den ersten kognitiven Informationsblock bezieht, wobei der erste faktische Informationsblock automatisch bereitgestellt wird durch
o Durchsuchen (301) einer ersten Datenbank (5), die in einer Computervorrichtung und/oder einem Computersystem gespeichert ist, nach zuvor gespeicherten Gruppen von Informationen, wobei jede zuvor gespeicherte Gruppe von Informationen einen kognitiven Informationsblock und einen faktischen Informationsblock umfasst, der zumindest ein Attribut umfasst, der sich auf den kognitiven Informationsblock bezieht, wobei der faktische Informationsblock zumindest einer faktischen Informationsdatei zugeordnet ist,
o wobei, wenn während des Durchsuchens eine Gruppe von Informationen gefunden wird, die einen kognitiven Informationsblock umfasst, der mit dem ersten kognitiven Informationsblock identisch ist, der von dem ML ID-Modul ausgegeben wird,
▪ eine Bestimmung vorgenommen wird, ob die Rohdatei semantisch identisch mit zumindest einer der zumindest einen faktischen Informationsdateien ist, die dem faktischen Informationsblock dieser Gruppe von Informationen zugeordnet ist, und
▪ wenn ja, der faktische Informationsblock dieser Gruppe von Informationen als erster faktischer Informationsblock definiert wird (302),
▪ wenn nicht, der erste faktische Informationsblock als unbekannte faktische Informationen definiert wird,
∘ wobei, wenn während des Durchsuchens keine Gruppe von Informationen gefunden wird, die einen kognitiven Informationsblock umfasst, der mit dem ersten kognitiven Informationsblock, der vom ML-Modul ausgegeben wird, identisch ist, der erste faktische Informationsblock ebenfalls als unbekannte faktische Informationen definiert wird (303),
- Paaren (205) des ersten kognitiven Informationsblocks und des ersten faktischen Informationsblocks zu einem Meta-Informationspaar,
- Loggen (206) des Meta-Informationspaares und eines Verweises auf die jeweilige verarbeitete Rohdatei in einer zweiten Datenbank (6), die in einer Computervorrichtung und/oder einem Computersystem gespeichert ist,
- wobei vor dem Verarbeiten einer digitalen Rohdatei eine Prüfung erfolgt, ob die digitale Rohdatei bereits verarbeitet wurde, wobei die Prüfung Folgendes umfasst
∘ die neue digitale Rohdatei mit zuvor eingegebenen digitalen Rohdateien zu vergleichen, die in einer dritten Datenbank (3) einer Computervorrichtung und/oder eines Computersystems gespeichert sind,
∘ wobei, wenn eine identische Rohdatei gefunden wird, die neue Rohdatei dem Meta-Informationspaar zugeordnet wird, das zuvor beim Verarbeiten der identischen Rohdatei bereitgestellt wurde,
∘ wobei, wenn keine identische Rohdatei gefunden wird, die digitale Rohdatei weiter verarbeitet wird, wobei ein neuer Eintrag in der dritten Datenbank (3) für die Rohdatei erstellt wird,
- wobei für den Fall, dass der erste faktische Informationsblock eines neuen Metapaares faktische Informationen umfasst, die in der ersten Datenbank enthalten sind, jedes Mal, wenn ein neues Metapaar in die zweite Datenbank (6) eingeloggt wird, die zweite Datenbank (6) aktualisiert wird durch
∘ Durchsuchen der zweiten Datenbank (6) nach allen Metapaaren, die denselben ersten kognitiven Informationsblock aufweisen,
∘ für jedes übereinstimmende Metapaar mit demselben kognitiven Informationsblock und mit einem faktischen Informationsblock, der unbekannte faktische Informationen aufweist, den faktischen Informationsblock dieses übereinstimmenden Metapaares mit dem faktischen Informationsblock des neuen Metapaares zu vergleichen, wobei der Vergleich das Vergleichen der jeweiligen Rohdateien umfasst, wobei, wenn die jeweiligen Rohdateien semantisch identisch sind, der faktische Informationsblock des übereinstimmenden Metapaares durch den faktischen Informationsblock des neuen Metapaares ersetzt wird, und wobei
- die erste Datenbank (5) als ein erstes Ledger mit einer Mehrzahl von Einträgen (14, 15) organisiert ist, wobei jeder Eintrag des ersten Ledgers zumindest einen ersten kognitiven Informationsblock, einen ersten faktischen Informationsblock und einen Verweis auf zumindest eine faktische Informationsdatei umfasst,
- die zweite Datenbank (6) als ein zweites Ledger mit einer Mehrzahl von Einträgen (61) organisiert ist, wobei jedes Meta-Informationspaar und der Verweis auf die jeweilige Rohdatei, die zum Extrahieren des kognitiven Informationsblocks verwendet wird, in einen Eintrag des zweiten Ledgers geschrieben wird, und
- die dritte Datenbank (3) als ein drittes Ledger mit einer Mehrzahl von Einträgen (31) organisiert ist, wobei jeder Eintrag des dritten Ledgers zumindest eine digitale Rohdatei oder einen Verweis auf den Speicherplatz der digitalen Rohdatei und einen Zeitstempel der digitalen Rohdatei umfasst.

2. Verfahren nach Anspruch 1, **dadurch gekennzeichnet, dass** die erste Datenbank (5) von zuvor gespeicherten Gruppen von Informationen in einer Trainingsphase aufgebaut wird, wobei jede Gruppe von Informationen bereitgestellt wird durch:
- Auswählen (401) eines kognitiven Informationsblocks, der zuvor von einem der ML-ID-Module bereitgestellt wurde, durch einen Benutzer, basierend auf einer Rohdatei zuvor gesammelter Daten,
- Hinzufügen (402) von Informationen über den ausgewählten kognitiven Informationsblock durch einen Benutzer, wobei diese Informationen in zumindest einer faktischen Informationsdatei bereitgestellt werden,
- Eingeben (403) der zumindest einen faktischen Informationsdatei in zumindest ein ML-ID-Modul und Empfangen eines faktischen Informationsblocks als semantische Ausgabe des ML-ID-Moduls,
- Speichern (404) des faktischen Informationsblocks zusammen mit dem kognitiven Informationsblock,
- ferner Speichern (405) in der Gruppe von Informationen zumindest eines Verweises auf die zumindest eine faktische Informationsdatei.

3. Verfahren nach Anspruch 1 oder 2, **dadurch gekennzeichnet, dass**
- Bestimmen, ob die Rohdatei semantisch identisch mit zumindest einer der faktischen Informationsdateien ist, das semantische Vergleichen der Rohdatei mit zumindest einer der faktischen Informationsdateien unter Verwendung von zumindest einem Vergleichsmodul für maschinelles Lernen, ML CP-Modul, beinhaltet,
- wobei sowohl die Rohdatei als auch die zumindest eine faktische Informationsdatei zum Vergleich in das ML-CP-Modul eingegeben werden, und
- wobei eine semantische Identität gefunden wird, wenn durch das Vergleichsergebnis, das vom ML-CP-Modul ausgegeben wird, ein konfigurierbarer Schwellenwert erreicht wird.

4. Verfahren nach einem der vorhergehenden Ansprüche, **dadurch gekennzeichnet, dass**
- jeder kognitive Informationsblock eines Metapaares eine erste Signatur umfasst,
- jeder faktische Informationsblock eines Metapaares eine zweite Signatur umfasst,
- wobei jedes Metapaar durch eine Metapaarsignatur identifiziert wird, die die erste Signatur und die zweite Signatur umfasst.

5. Verfahren nach einem der vorhergehenden Ansprüche, **dadurch gekennzeichnet, dass** jedes Mal, wenn ein neues Metapaar in der zweiten Datenbank (6) eingeloggt wird, die zweite Datenbank (6) aktualisiert wird durch
- Durchsuchen der zweiten Datenbank (6) nach allen Metapaaren, die denselben ersten kognitiven Informationsblock aufweisen,
- für jedes übereinstimmende Metapaar mit demselben kognitiven Informationsblock die jeweiligen Rohdateien durch ein ML-CP-Modul hinsichtlich ihrer Semantik zu vergleichen, wobei, wenn die Semantik der jeweiligen Rohdateien identisch ist, der faktische Informationsblock des übereinstimmenden Metapaares den faktischen Informationsblock des neuen Metapaares ersetzt, wodurch ein neuer erster faktischer Informationsblock auf einen zuvor gespeicherten ersten faktischen Informationsblock bezogen wird.

6. Verfahren nach einem der vorhergehenden Ansprüche, **dadurch gekennzeichnet, dass** das Verfahren ferner umfasst:
- Vergleichen von Metapaaren von Informationen in der zweiten Datenbank (6) mit Metapaaren, die denselben ersten kognitiven Informationsblock oder denselben ersten faktischen Informationsblock aufweisen,
- wobei Informationen über Metapaare mit entsprechenden Informationsblöcken zusammen mit den Metapaaren gespeichert werden.

7. Verfahren nach einem der vorhergehenden Ansprüche, **dadurch gekennzeichnet, dass**
- der kognitive Informationsblock in einem Eintrag (145) des ersten Ledgers (5) beinhaltet ist, das eine Tabelle umfasst, die auf eine Tabelle mit öffentlichen Modellen (140) verweist, wobei die Tabelle mit öffentlichen Modellen ein ML-ID-Modul und eine Speicherquelle identifiziert, und
- der faktische Informationsblock in einem Eintrag (155) des ersten Ledgers (5) beinhaltet ist, das eine Tabelle umfasst, die auf eine Tabelle mit privaten Modellen (150) verweist, wobei die Tabelle mit privaten Modellen ein ML-CP-Modul, eine Speicherquelle der zumindest einen faktischen Informationsdatei und persönliche Information identifiziert.

8. Verfahren nach einem der vorhergehenden Ansprüche, **dadurch gekennzeichnet, dass** die Einträge (61) des zweiten Ledgers (6) jeweils zusätzlich einen Verweis auf den Eintrag (31) des dritten Ledgers (3) umfassen, in dem die digitale Rohdatei oder ein Verweis auf den Speicherplatz der digitalen Rohdatei gespeichert ist.

9. Verfahren nach einem der vorhergehenden Ansprüche, **dadurch gekennzeichnet, dass** das Verfahren ferner das Bereitstellen von in der zweiten Datenbank (6) gespeicherten oder darauf verweisenden Informationen auf eine Anfrage des Benutzers umfasst, wobei die Anfrage das Identifizieren zumindest eines Punktes oder einer Zeitperiode, eines ersten kognitiven Informationsblocks, eines ersten faktischen Informationsblocks und eines Meta-Informationspaares umfasst.

10. Datenverarbeitungssystems (10) zum Sammeln, Organisieren und Speichern von Daten, die sich auf die Erinnerungen eines Benutzers beziehen, wobei das System Folgendes umfasst:
- einen oder mehrere Prozessoren;
- eine Speichervorrichtung, die mit dem einen oder mehreren Prozessoren betreibbar gekoppelt ist und in der Programmanweisungen gespeichert sind, die, wenn sie von dem einen oder mehreren Prozessoren ausgeführt werden, den einen oder mehrere Prozessoren dazu konfigurieren:
- automatisch Daten zu sammeln (201), die sich auf Ereignisse oder Fakten beziehen, die Erinnerungen des Benutzers bilden können, unter Verwendung von Sensorquellen und/oder digitalen Quellen,
- die gesammelten Daten in eine Mehrzahl von digitalen Rohdateien und Zeitstempeln der digitalen Rohdateien zu trennen (202),
- zumindest einiger der digitalen Rohdateien zu verarbeiten, wobei das Verarbeiten für jede verarbeitete Rohdatei Folgendes umfasst:
- die Rohdatei in zumindest ein maschinelles Lernidentifikationsmodul, ML ID-Modul einzugeben (203), wobei das zumindest eine ML ID-Modul zumindest eines von einem ML ID-Modul zur Objekterkennung, einem ML ID-Modul zur Gesichts- und Personenerkennung und einem ML ID-Modell zur Spracherkennung umfasst, und einen ersten kognitiven Informationsblock zu empfangen, der den Inhalt der Rohdatei identifiziert, als semantische Ausgabe des ML ID-Moduls,
- einen ersten faktischen Informationsblock bereitzustellen (204), der zumindest ein Attribut umfasst, das sich auf den ersten kognitiven Informationsblock bezieht, wobei der erste faktische Informationsblock automatisch bereitgestellt wird durch
o Durchsuchen (301) einer ersten Datenbank (5), die in einer Computervorrichtung und/oder einem Computersystem gespeichert ist, nach zuvor gespeicherten Gruppen von Informationen, wobei jede zuvor gespeicherte Gruppe von Informationen einen kognitiven Informationsblock und einen faktischen Informationsblock umfasst, der zumindest ein Attribut umfasst, das sich auf den kognitiven Informationsblock bezieht, wobei der faktische Informationsblock zumindest einer faktischen Informationsdatei zugeordnet ist,
o wobei, wenn während des Durchsuchens eine Gruppe von Informationen gefunden wird, die einen kognitiven Informationsblock umfasst, der mit dem ersten kognitiven Informationsblock identisch ist, der von dem ML ID-Modul ausgegeben wird,
▪ eine Bestimmung vorgenommen wird, ob die Rohdatei semantisch identisch mit zumindest einer der zumindest einen faktischen Informationsdateien ist, die dem faktischen Informationsblock dieser Gruppe von Informationen zugeordnet sind, und
▪ wenn ja, der faktische Informationsblock dieser Gruppe von Informationen, als erster faktischer Informationsblock definiert wird (302)
▪ wenn nicht, der erste faktische Informationsblock als unbekannte faktische Informationen definiert wird,
∘ wobei, wenn während des Durchsuchens keine Gruppe von Informationen gefunden wird, die einen kognitiven Informationsblock umfasst, der mit dem ersten kognitiven Informationsblock, der vom ML-Modul ausgegeben wird, identisch ist, der erste faktische Informationsblock ebenfalls als unbekannte faktische Informationen definiert wird (303),
- den ersten kognitiven Informationsblock und den ersten faktischen Informationsblock zu einem Meta-Informationspaar zu paaren (205),
- das Meta-Informationspaar und eines Verweises auf die jeweilige verarbeitete Rohdatei in einer zweiten Datenbank (6) zu loggen (206), die in einer Computervorrichtung und/oder einem Computersystem gespeichert ist, wobei
- vor dem Verarbeiten einer digitalen Rohdatei, eine Prüfung erfolgt, ob die digitale Rohdatei bereits verarbeitet wurde, wobei die Prüfung Folgendes umfasst
∘ die neue digitale Rohdatei mit zuvor eingegebenen digitalen Rohdateien zu vergleichen, die in einer dritten Datenbank (3) einer Computervorrichtung und/oder eines Computersystems gespeichert sind,
∘ wobei, wenn eine identische Rohdatei gefunden wird, die neue Rohdatei dem Meta-Informationspaar zugeordnet wird, das zuvor beim Verarbeiten der identischen Rohdatei bereitgestellt wurde;
∘ wobei, wenn keine identische Rohdatei gefunden wird, die digitale Rohdatei weiter verarbeitet wird, wobei ein neuer Eintrag in der dritten Datenbank (3) für die Rohdatei erstellt wird,
- wobei für den Fall, dass der erste faktische Informationsblock eines neuen Metapaares faktische Informationen umfasst, die in der ersten Datenbank enthalten sind, jedes Mal, wenn ein neues Metapaar in die zweite Datenbank (6) eingeloggt wird, die zweite Datenbank (6) aktualisiert wird durch
∘ Durchsuchen der zweiten Datenbank (6) nach allen Metapaaren, die denselben ersten kognitiven Informationsblock aufweisen,
∘ für jedes übereinstimmende Metapaar mit demselben kognitiven Informationsblock und mit einem faktischen Informationsblock, der unbekannte faktische Informationen aufweist, den faktischen Informationsblock dieses übereinstimmenden Metapaares mit dem faktischen Informationsblock des neuen Metapaares zu vergleichen, wobei der Vergleich das Vergleichen der jeweiligen Rohdateien umfasst, wobei, wenn die jeweiligen Rohdateien semantisch identisch sind, der faktische Informationsblock des übereinstimmenden Metapaares durch den faktischen Informationsblock des neuen Metapaares ersetzt wird, und wobei
- die erste Datenbank (5) als ein erstes Ledger mit einer Mehrzahl von Einträgen (14, 15) organisiert ist, wobei jeder Eintrag des ersten Ledgers zumindest einen ersten kognitiven Informationsblock, einen ersten faktischen Informationsblock und einen Verweis auf zumindest eine faktische Informationsdatei umfasst,
- die zweite Datenbank (6) als ein zweites Ledger mit einer Mehrzahl von Einträgen (61) organisiert ist, wobei jedes Meta-Informationspaar und der Verweis auf die jeweilige Rohdatei, die zum Extrahieren des kognitiven Informationsblocks verwendet wird, in einen Eintrag des zweiten Ledgers geschrieben wird, und
die dritte Datenbank (3) ein drittes Ledger mit einer Mehrzahl von Einträgen (31) organisiert ist, wobei jeder Eintrag des dritten Ledgers zumindest eine digitale Rohdatei oder einen Verweis auf den Speicherplatz der digitalen Rohdatei und einen Zeitstempel der digitalen Rohdatei umfasst.

## Revendications

1. Procédé mis en œuvre par ordinateur pour collecter, organiser et stocker des données relatives aux souvenirs d'un utilisateur, le procédé comprenant les étapes suivantes :
- collecter automatiquement (201) des données relatives à des événements ou à des faits susceptibles de constituer des souvenirs de l'utilisateur à l'aide de sources de capteurs et/ou de sources numériques,
- séparer (202) les données collectées en une pluralité de fichiers numériques bruts, et horodater les fichiers numériques bruts,
- traiter au moins certains des fichiers numériques bruts, le traitement comprenant, pour chaque fichier brut traité, les étapes suivantes :
- entrer (203) le fichier brut dans au moins un module d'identification à apprentissage automatique, module ML ID, où l'au moins un module ML ID comprend au moins un module parmi un module ML ID de détection d'objets, un module ML ID de détection de visages et de personnes, et un modèle ML ID de reconnaissance vocale, et recevoir, en tant que sortie sémantique du module ML ID, un premier bloc cognitif d'informations identifiant le contenu du fichier brut,
- fournir (204) un premier bloc factuel d'informations comprenant au moins un attribut relatif au premier bloc cognitif d'informations, le premier bloc factuel d'informations étant fourni automatiquement :
∘ en recherchant (301) dans une première base de données (5) stockée dans un dispositif informatique et/ou un système informatique des groupes d'informations précédemment stockés, chaque groupe d'informations précédemment stocké comprenant un bloc cognitif d'informations et un bloc factuel d'informations comprenant au moins un attribut relatif au bloc cognitif d'informations, le bloc factuel d'informations étant associé à au moins un fichier d'informations factuelles,
∘ où, si au cours de la recherche, un groupe d'informations comprenant un bloc cognitif d'informations identique au premier bloc cognitif d'informations délivré en sortie par le module ML ID est trouvé,
• il est déterminé si le fichier brut est sémantiquement identique à au moins un fichier des au moins un fichier d'informations factuelles associés au bloc factuel d'informations de ce groupe d'informations, et
• dans l'affirmative, le premier bloc factuel d'informations est défini (302) en tant que bloc factuel d'informations de ce groupe d'informations,
• si tel n'est pas le cas, le premier bloc factuel d'informations est défini en tant qu'informations factuelles inconnues,
∘ où, si au cours de la recherche, aucun groupe d'informations comprenant un bloc cognitif d'informations identique au premier bloc cognitif d'informations délivré en sortie par le module ML, n'est trouvé, le premier bloc factuel d'informations est également défini (303) en tant qu'informations factuelles inconnues,
- apparier (205) le premier bloc cognitif d'informations et le premier bloc factuel d'informations en une méta-paire d'informations,
- enregistrer (206) la méta-paire d'informations et une référence au fichier brut traité respectif dans une deuxième base de données (6) stockée dans un dispositif informatique et/ou un système informatique,
- où, avant de traiter un fichier numérique brut, il est vérifié si le fichier numérique brut a déjà été traité, la vérification comprenant de :
∘ comparer le nouveau fichier numérique brut aux fichiers numériques bruts précédemment entrés et stockés dans une troisième base de données (3) d'un dispositif informatique et/ou d'un système informatique,
∘ où, si un fichier brut identique est trouvé, le nouveau fichier brut est associé à la méta-paire d'informations précédemment fournie par le traitement du fichier brut identique,
∘ où, si aucun fichier brut identique n'est trouvé, le fichier brut numérique est traité plus avant, une nouvelle entrée étant créée dans la troisième base de données (3) pour le fichier brut,
- où, si le premier bloc factuel d'informations d'une nouvelle méta-paire comprend des informations factuelles contenues dans la première base de données, chaque fois qu'une nouvelle méta-paire est enregistrée dans la deuxième base de données (6), la deuxième base de données (6) est mise à jour par les moyens suivants :
∘ en recherchant toutes les méta-paires de la deuxième base de données (6) qui ont le même premier bloc cognitif d'informations,
∘ pour chaque méta-paire correspondante avec le même bloc cognitif d'informations et avec un bloc factuel d'informations qui consiste en des informations factuelles inconnues, comparer le bloc factuel d'informations de cette méta-paire correspondante avec le bloc factuel d'informations de la nouvelle méta-paire, la comparaison comprenant de comparer les fichiers bruts respectifs, où si les fichiers bruts respectifs sont sémantiquement identiques, le bloc factuel d'informations de la méta-paire correspondante est remplacé par le bloc factuel d'informations de la nouvelle méta-paire, et où :
- la première base de données (5) est organisée sous la forme d'un premier registre comprenant une pluralité d'entrées (14, 15), où chaque entrée du premier registre comprend au moins un premier bloc cognitif d'informations, un premier bloc factuel d'informations et une référence à au moins un fichier d'informations factuelles,
- la deuxième base de données (6) est organisée sous la forme d'un deuxième registre comprenant une pluralité d'entrées (61), où chaque méta-paire d'informations et la référence au fichier brut respectif utilisé pour extraire le bloc cognitif d'informations sont inscrites dans une entrée du deuxième registre, et
- la troisième base de données (3) est organisée sous la forme d'un troisième registre comprenant une pluralité d'entrées (31), où chaque entrée du troisième registre comprend au moins un fichier numérique brut ou une référence à l'espace de stockage du fichier numérique brut et un horodatage du fichier numérique brut.

2. Procédé selon la revendication 1, **caractérisé en ce que** la première base de données (5) de groupes d'informations précédemment stockés est construite lors d'une phase d'entraînement, où chaque groupe d'informations est fourni :
- en choisissant (401), par un utilisateur, un bloc cognitif d'informations précédemment fourni par l'un des modules ML ID sur la base d'un fichier brut de données précédemment collectées,
- en ajoutant (402), par un utilisateur, des informations sur le bloc cognitif d'informations choisi, ces informations étant fournies dans au moins un fichier d'informations factuelles,
- en entrant (403) l'au moins un fichier d'informations factuelles dans au moins un module ML ID et en recevant un bloc factuel d'informations en tant que sortie sémantique du module ML ID,
- en stockant (404) le bloc factuel d'informations avec le bloc cognitif d'informations,
- en stockant en outre (405), dans le groupe d'informations, au moins une référence à l'au moins un fichier d'informations factuelles.

3. Procédé selon la revendication 1 ou la revendication 2, **caractérisé en ce que** :
- la détermination du fait que le fichier brut est sémantiquement identique à au moins un fichier de l'au moins un fichier d'informations factuelles comprend la comparaison sémantique, à l'aide d'au moins un module de comparaison à apprentissage automatique, module ML CP, du fichier brut à au moins un des fichiers d'informations factuelles,
- où à la fois le fichier brut et l'au moins un fichier d'informations factuelles sont entrés dans le module ML CP pour être comparés, et
- où une identité sémantique est trouvée si un seuil configurable est atteint par le résultat de la comparaison délivré en sortie par le module ML CP.

4. Procédé selon l'une quelconque des revendications précédentes, **caractérisé en ce que** :
- chaque bloc cognitif d'informations d'une méta-paire comprend une première signature,
- chaque bloc factuel d'informations d'une méta-paire comprend une deuxième signature,
- où chaque méta-paire est identifiée par une signature de méta-paire comprenant la première signature et la deuxième signature.

5. Procédé selon l'une quelconque des revendications précédentes, **caractérisé en ce que** chaque fois qu'une nouvelle méta-paire est enregistrée dans la deuxième base de données (6), la deuxième base de données (6) est mise à jour :
- en recherchant toutes les méta-paires de la deuxième base de données (6) qui ont le même premier bloc cognitif d'informations,
- pour chaque méta-paire correspondante ayant le même bloc cognitif d'informations, comparer les fichiers bruts respectifs par un module ML CP quant à leur sémantique ; si la sémantique des fichiers bruts respectifs est identique, le bloc factuel d'informations de la méta-paire correspondante remplace le bloc factuel d'informations de la nouvelle méta-paire, renvoyant ainsi un nouveau premier bloc factuel d'informations à un premier bloc factuel d'informations précédemment stocké.

6. Procédé selon l'une quelconque des revendications précédentes, **caractérisé en ce que** le procédé comprend en outre l'étape suivante :
- comparer les méta-paires d'informations dans la deuxième base de données (6) aux méta-paires d'informations ayant le même premier bloc cognitif d'informations ou le même premier bloc factuel d'informations,
- où les informations concernant les méta-paires ayant des blocs d'informations correspondants sont stockées avec les méta-paires.

7. Procédé selon l'une quelconque des revendications précédentes, **caractérisé en ce que** :
- le bloc cognitif d'informations est inclus dans une entrée (145) du premier registre (5) qui comprend une table faisant référence à une table de modèles publics (140), la table de modèles publics identifiant un module ML ID et une source de stockage, et
- le bloc factuel d'informations est inclus dans une entrée (155) du premier registre (5) qui comprend une table faisant référence à une table de modèles privés (150), la table de modèles privés identifiant un module ML CP, une source de stockage de l'au moins un fichier d'informations factuelles et des informations personnelles.

8. Procédé selon l'une quelconque des revendications précédentes, **caractérisé en ce que** les entrées (61) du deuxième registre (6) comprennent chacune en outre une référence à l'entrée (31) du troisième registre (3) où le fichier brut numérique ou une référence à l'espace de stockage du fichier brut numérique est stocké.

9. Procédé selon l'une quelconque des revendications précédentes, **caractérisé en ce que** le procédé comprend en outre de fournir, à la demande de l'utilisateur, des informations stockées ou référencées dans la deuxième base de données (6), la demande comprenant d'identifier au moins l'un des éléments suivants : un point ou une période dans le temps, un premier bloc cognitif d'informations, un premier bloc factuel d'informations et une méta-paire d'informations.

10. Système de traitement de données (10) comprenant de collecter, d'organiser et de stocker des données relatives aux souvenirs d'un utilisateur, le système comprenant :
- un ou plusieurs processeurs ;
- un dispositif de stockage couplé de manière opérationnelle au un ou plusieurs processeurs et contenant des instructions de programme qui, lorsqu'elles sont exécutées par les un ou plusieurs processeurs, configurent les un ou plusieurs processeurs pour :
- collecter automatiquement (201) les données relatives à des événements ou à des faits susceptibles de constituer des souvenirs de l'utilisateur à l'aide de sources de capteurs et/ou de sources numériques,
- séparer (202) les données collectées en une pluralité de fichiers numériques bruts, et horodater les fichiers numériques bruts,
- traiter au moins certains des fichiers numériques bruts, le traitement comprenant, pour chaque fichier brut traité, les étapes suivantes :
- entrer (203) le fichier brut dans au moins un module d'identification à apprentissage automatique, module ML ID, où l'au moins un module ML ID comprend au moins un module parmi un module ML ID de détection d'objets, un module ML ID de détection de visages et de personnes, et un modèle ML ID de reconnaissance vocale, et recevoir, en tant que sortie sémantique du module ML ID, un premier bloc cognitif d'informations identifiant le contenu du fichier brut,
- fournir (204) un premier bloc factuel d'informations comprenant au moins un attribut relatif au premier bloc cognitif d'informations, le premier bloc factuel d'informations étant fourni automatiquement :
o∘ en recherchant (301) dans une première base de données (5) stockée dans un dispositif informatique et/ou un système informatique des groupes d'informations précédemment stockés, chaque groupe d'informations précédemment stocké comprenant un bloc cognitif d'informations et un bloc factuel d'informations comprenant au moins un attribut relatif au bloc cognitif d'informations, le bloc factuel d'informations étant associé à au moins un fichier d'informations factuelles,
∘ où, si au cours de la recherche, un groupe d'informations comprenant un bloc cognitif d'informations identique au premier bloc cognitif d'informations délivré en sortie par le module ML ID est trouvé,
• il est déterminé si le fichier brut est sémantiquement identique à au moins un fichier des au moins un fichier d'informations factuelles associés au bloc factuel d'informations de ce groupe d'informations, et
• dans l'affirmative, le premier bloc factuel d'informations est défini (302) en tant que bloc factuel d'informations de ce groupe d'informations,
• si tel n'est pas le cas, le premier bloc factuel d'informations est défini en tant qu'informations factuelles inconnues,
∘ où, si au cours de la recherche, aucun groupe d'informations comprenant un bloc cognitif d'informations identique au premier bloc cognitif d'informations délivré en sortie par le module ML, n'est trouvé, le premier bloc factuel d'informations est également défini (303) en tant qu'informations factuelles inconnues,
- apparier (205) le premier bloc cognitif d'informations et le premier bloc factuel d'informations en une méta-paire d'informations,
- enregistrer (206) la méta-paire d'informations et une référence au fichier brut traité respectif dans une deuxième base de données (6) stockée dans un dispositif informatique et/ou un système informatique,
- où, avant de traiter un fichier numérique brut, il est vérifié si le fichier numérique brut a déjà été traité, la vérification comprenant de :
∘ comparer le nouveau fichier numérique brut aux fichiers numériques bruts précédemment entrés et stockés dans une troisième base de données (3) d'un dispositif informatique et/ou d'un système informatique,
∘ où, si un fichier brut identique est trouvé, le nouveau fichier brut est associé à la méta-paire d'informations précédemment fournie par le traitement du fichier brut identique,
∘ où, si aucun fichier brut identique n'est trouvé, le fichier brut numérique est traité plus avant, une nouvelle entrée étant créée dans la troisième base de données (3) pour le fichier brut,
- où, si le premier bloc factuel d'informations d'une nouvelle méta-paire comprend des informations factuelles contenues dans la première base de données, chaque fois qu'une nouvelle méta-paire est enregistrée dans la deuxième base de données (6), la deuxième base de données (6) est mise à jour par les moyens suivants :
∘ en recherchant toutes les méta-paires de la deuxième base de données (6) qui ont le même premier bloc cognitif d'informations,
∘ pour chaque méta-paire correspondante avec le même bloc cognitif d'informations et avec un bloc factuel d'informations qui consiste en des informations factuelles inconnues, comparer le bloc factuel d'informations de cette méta-paire correspondante avec le bloc factuel d'informations de la nouvelle méta-paire, la comparaison comprenant de comparer les fichiers bruts respectifs, où si les fichiers bruts respectifs sont sémantiquement identiques, le bloc factuel d'informations de la méta-paire correspondante est remplacé par le bloc factuel d'informations de la nouvelle méta-paire, et où :
- la première base de données (5) est organisée sous la forme d'un premier registre comprenant une pluralité d'entrées (14, 15), où chaque entrée du premier registre comprend au moins un premier bloc cognitif d'informations, un premier bloc factuel d'informations et une référence à au moins un fichier d'informations factuelles,
- la deuxième base de données (6) est organisée sous la forme d'un deuxième registre comprenant une pluralité d'entrées (61), où chaque méta-paire d'informations et la référence au fichier brut respectif utilisé pour extraire le bloc cognitif d'informations sont inscrites dans une entrée du deuxième registre, et
- la troisième base de données (3) est organisée sous la forme d'un troisième registre comprenant une pluralité d'entrées (31), où chaque entrée du troisième registre comprend au moins un fichier numérique brut ou une référence à l'espace de stockage du fichier numérique brut et un horodatage du fichier numérique brut.
